(19) Europäisches Patentamt / European Patent Office / Office européen des brevets

(11) **EP 2 462 459 B1**

(12) **FASCICULE DE BREVET EUROPEEN**

(45) Date de publication et mention
de la délivrance du brevet:
**02.10.2013 Bulletin 2013/40**

(21) Numéro de dépôt: **10739919.8**

(22) Date de dépôt: **02.08.2010**

(51) Int Cl.:
*G01S 3/74* (2006.01)    *H01Q 3/26* (2006.01)
*H01Q 21/06* (2006.01)

(86) Numéro de dépôt international:
**PCT/EP2010/061217**

(87) Numéro de publication internationale:
**WO 2011/015557 (10.02.2011 Gazette 2011/06)**

(54) **PROCEDE POUR OPTIMISER LA STRUCTURE D'UN RESEAU DE CAPTEURS IDENTIQUES POUR LA GONIOMETRIE**

VERFAHREN ZUR OPTIMIERUNG DER STRUKTUR EINES NETWZERKS AUS IDENTISCHEN SENSOREN FÜR GONIOMETRIE

METHOD FOR OPTIMIZING THE STRUCTURE OF A NETWORK OF IDENTICAL SENSORS FOR GONIOMETRY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **03.08.2009 FR 0903836**

(43) Date de publication de la demande:
**13.06.2012 Bulletin 2012/24**

(73) Titulaire: **Thales**
**92200 Neuilly Sur Seine (FR)**

(72) Inventeurs:
• **FERREOL, Anne**
**F-92700 Colombes (FR)**
• **CHEVALIER, Pascal**
**F-92700 Colombes (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **HOUCEM GAZZAH ET AL: "Optimum ambiguity-free isotropic antenna arrays" ACOUSTICS, SPEECH AND SIGNAL PROCESSING, 2009. ICASSP 2009. IEEE INTERNATIONAL CONFERENCE ON, IEEE, PISCATAWAY, NJ, USA, 19 avril 2009 (2009-04-19), pages 2157-2160, XP031459690 ISBN: 978-1-4244-2353-8**
• **PETER J BEVELACQUA ET AL: "Optimizing Antenna Array Geometry for Interference Suppression" IEEE TRANSACTIONS ON ANTENNAS AND PROPAGATION, IEEE SERVICE CENTER, PISCATAWAY, NJ, US LNKD- DOI: 10.1109/TAP.2007.891509, vol. 55, no. 3, 1 mars 2007 (2007-03-01), pages 637-641, XP011172621 ISSN: 0018-926X**
• **GAZZAH H ET AL: "Antenna arrays for enhanced estimation of azimuth and elevation" PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA; [IEEE INTERNATIONAL CONFERENCE ON ACOUSTICS, SPEECH, AND SIGNAL PROCESSING (ICASSP)], 2003 IEEE INTERNATIONAL CONFERENCE, vol. 5, 6 avril 2003 (2003-04-06), pages V_213-V_216, XP010639246 ISBN: 978-0-7803-7663-2**

**Description**

L'objet de la présente invention concerne notamment un procédé permettant de déterminer de manière optimale la position de capteurs dans un réseau comportant plusieurs capteurs utilisés pour la goniométrie. Le procédé concerne les réseaux homogènes composés de capteurs identiques où la réponse du réseau à une direction Θ dépend uniquement du vecteur d'onde $\mathbf{k}(\Theta)$ et des positions $\mathbf{p}_n$ des capteurs.

L'invention trouve son application pour définir un système de goniométrie et d'un réseau de capteurs en particulier, à partir d'un cahier des charges de performances données. Elle concerne la définition de produits permettant de faire de la goniométrie dans les gammes Haute fréquence HF et très haute fréquence V/UHF ainsi que les produits IFF.

Elle trouve son utilisation dans des systèmes de goniométrie radio-cellulaire où les réseaux sont souvent des patchs de taille non négligeable que l'on souhaite installer sur une plaque de dimension finie.

De manière plus générale, le domaine concerné par la présente invention est celui du traitement d'antennes qui traite les signaux de plusieurs sources émettrices à partir des observations provenant de plusieurs capteurs.

Elle trouve aussi son application dans les procédés de localisation en imagerie médicale pour la localisation de tumeurs ou de foyers épileptiques, dans des applications de sondage pour la recherche pétrolière et minière dans le domaine de la sismique, dans la localisation de sources dans un contexte urbain ou sous-marin.

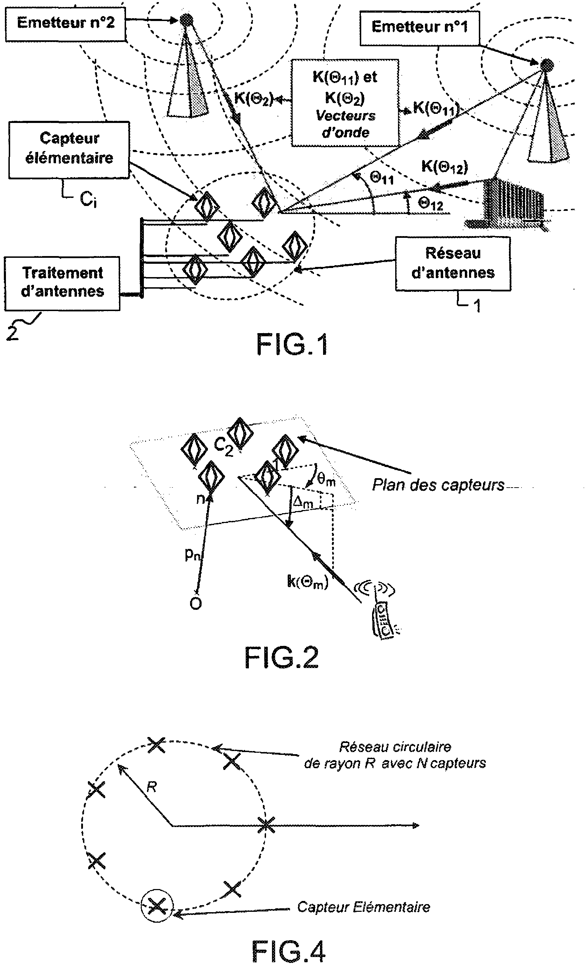

Un ensemble de capteurs est appelé réseau d'antennes 1 ou réseau de capteurs. Dans un contexte électromagnétique, les capteurs sont des antennes et les sources radioélectriques se propagent selon une polarisation. La figure 1 montre un exemple de système 2 de traitement d'antennes où un réseau de capteurs Ci reçoit les signaux de plusieurs sources d'incidences Ei sources d'incidence $\Theta_{mp}$. Les techniques de traitement d'antennes exécuté par un processeur P ont pour objectif de séparer ou d'extraire des informations associées à chacune des sources en exploitant la diversité spatiale dépendante de la géométrie du réseau d'antennes et de l'incidence $\Theta_{mp}$ des sources. Le domaine est plus particulièrement celui de la goniométrie qui consiste à estimer les directions $\Theta_{mp}$ de chacune des sources.

Les capteurs élémentaires du réseau reçoivent les sources avec une phase et une amplitude dépendantes en particulier des incidences des trajets et de la position des capteurs.

D'après la figure 2, l'incidence d'un trajet est soit définie par des paramètres de direction $\Theta_m = \{\theta_m$ et/ou $\Delta_m\}$ soit par le vecteur d'onde $\mathbf{k}(\Theta_m) = [u_m v_m w_m]^T$ qui est de norme unité. Les angles $\theta_m$ et $\Delta_m$ sont respectivement l'azimut et l'élévation. Une technique de goniométrie a pour objectif d'estimer les composantes soit de $\Theta_m$, soit de $\mathbf{k}(\Theta_m)$. Une goniométrie est dite q-D lorsque le nombre de paramètres à estimer vaut q. Les autres paramètres sont soit connus a priori soit indéterminés. D'après la figure 1, le vecteur $\mathbf{p}_n = [x_n\ y_n\ z_n]^T$ est le vecteur de position du n-ième capteur par rapport à un point d'origine $\mathbf{O}$. Un réseau de N antennes est dit d-D, lorsque l'espace engendré par les vecteurs de position $\mathbf{p}_n$ ($1 \leq n \leq N$) est de dimension d. En conséquence un réseau linéaire est de dimension 1 (1-D) et un réseau plan de dimension 2 (2-D).

L'un des problèmes techniques à résoudre est celui de l'optimisation de la goniométrie d'un réseau d'antennes. Plus particulièrement, l'un des objectifs est de déterminer la position $\mathbf{p}_n$ des N capteurs pour ($1 \leq n \leq N$) à partir de critères de performances contenus dans un cahier des charges tel que : la précision mono-source ou bi-sources, la résolution de deux sources, sous des contraintes telles que par exemple: un nombre N d'antennes donné, le caractère plus ou moins omnidirectionnel du réseau d'antennes dans une certaine zone de l'espace, un encombrement maximal donné, des positions admissibles et non admissibles d'implantation des capteurs, une distance minimale entre capteurs pour minimiser le couplage mutuel entre antennes, un niveau maximal d'ambiguïtés donné.
Notons qu'un réseau est dit omnidirectionnel lorsque les performances mono-source du réseau sont indépendantes de la direction d'arrivée.

La littérature concernant les calculs de performances théoriques est très abondante. Ces performances sont généralement des variances ou biais des paramètres à estimer tels que $\Theta_m$ ou $\mathbf{k}(\Theta_m)$. Dans les articles de performances, à la connaissance du Demandeur, un seul ayant pour auteurs H. Gazzah et S. Marcos, intitulé « Cramer- Rao Bounds for Antenna Array Design » et publié au journal IEEE Trans. Signal Processing, 54 (1) : 336- 345, Jan. 2006., établit un lien entre la borne stochastique et les positions $\mathbf{p}_n$ des N capteurs en situation mono- source pour une goniométrie 2-D avec un réseau 2- D. Les auteurs de cet article utilisent ce lien pour établir un critère analytique de directivité dépendant de l'angle formé par les deux branches d'un réseau deux dimensions en V, le réseau est composé de N=2M+1 capteurs composé de deux branches avec un réseau linéaire uniforme ayant le premier capteur en commun.

L'article «Optimum ambiguity-face isotropic antenna arrays», Houcem Gazza et al., ICASSP 2009, avril 2009, décrit un procédé pour déterminer la position optimale de capteurs pour effectuer des mesures de gomiométrie au sein d'un réseau de communications.

Malgré les avantages qu'elle apporte, la technique développée par l'art antérieur présente notamment les inconvénients suivants :

- d'avoir établi le lien analytique entre les performances et les positions des capteurs uniquement à partir de la borne stochastique en mono-source,

- de ne pas avoir établi de critère reliant la résolution de deux sources et la géométrie des capteurs,
- de traiter une seule famille de réseau 2-D très particulière qui sont les réseaux en V composés de deux sous-réseaux linéaire uniformes respectant le critère de non-ambiguïté.

Dans la suite de la description, la notation $\Delta$ avec un seul indice comme $\Delta_m$ est utilisée pour désigner des angles, alors que la notation $\Delta$ avec deux indices comme $\Delta_{12}$ est relative à une distance dans l'espace du vecteur d'onde ou encore la norme de $\Delta\mathbf{k}$ qui est la différence entre les vecteurs d'onde de deux sources.

L'objet de la présente invention concerne un procédé pour déterminer la position optimale de capteurs identiques au sein d'un réseau de communications ayant une dimension variant de d=1 à 3 où d est la dimension du réseau de capteurs de dimension destiné à effectuer des mesures de goniométrie, lesdites mesures de goniométrie minimisant les ambiguïtés du réseau en tenant compte de paramètres d'un cahier des charges comprenant des performances mono-source du réseau traduites par des ellipses d'incertitude ou un intervalle pour le cas des

réseaux à une dimension, l'encombrement résultant de la taille d'un réseau de capteurs, le pouvoir de résolution en présence de deux sources, caractérisé en ce qu'il comporte au moins les étapes suivantes :

initialiser à 0 un indice i de réseau et à 1 le nombre de réseau disponible,

prendre de manière aléatoire un réseau ayant une structure de N capteurs disposés dans des positions initiales $\mathbf{p}_{d,n}$ $(1 \leq n \leq N)$,

déterminer la matrice $D_{pp}^{directif}$ obéissant à l'ellipse d'incertitude donnée dans le cahier des charges ou l'intervalle pour les réseaux à une dimension, les axes de l'ellipse d'incertitude dans l'espace des angles d'azimuth et d'élévation étant définis par les écarts types $\sigma_{\theta_{min}=\theta_{directif}} = \min_{\theta} \sigma_\theta$ et $\sigma_{\theta_{max}=\theta_{directif}-\frac{\pi}{2}} = \max_{\theta} \sigma_\theta$ minimal et maximal en azimut sachant que $\sigma_\theta = \sqrt{E\left[\left(\theta_m - \hat{\theta}_m\right)^2\right]}$) et par l'écart type en élévation $\sigma_\Delta = \sqrt{E\left[\left(\Delta_m - \hat{\Delta}_m\right)^2\right]}$, ladite détermination comprenant les étapes suivantes :

calculer la matrice de corrélation $\mathbf{D}_{pp}$ des positions $\mathbf{p}_{d,n}$ des capteurs d'un réseau d-D initial

$$\mathbf{D}_{pp} = \frac{1}{N}\sum_{n=1}^{N}\left(\mathbf{p}_{d,n} - \overline{\mathbf{p}}\right)\left(\mathbf{p}_{d,n} - \overline{\mathbf{p}}\right)^T \text{ avec } \overline{\mathbf{p}} = \frac{1}{N}\sum_{n=1}^{N}\mathbf{p}_{d,n}$$

Où d est la dimension du réseau de capteurs et n l'indice du capteur,

déterminer les valeurs $\sigma_{d,1} = \sigma_{\theta_{min}}\left|\cos\left(\Delta_m\right)\right|$ et $\sigma_{d,d} = \sigma_{\theta_{max}}\left|\cos(\Delta_m)\right|$ ($\sigma_{3,2} = \sigma_\Delta$ pour les réseaux 3-D avec d=3) des axes de l'ellipse d'incertitude dans l'espace du vecteur d'onde à partir de $\sigma_{\theta_{min}}$ et $\sigma_{\theta_{max}}$ qui sont les axes de l'ellipse d'incertitude dans l'espace de l'azimut et de l'élévation ou correspondant à l'intervalle dans le cas à une dimension, avec d = 1, 2 ou 3 , Où $\sigma_{\theta_{min}}$ et $\sigma_{\theta_{max}}$ sont les valeurs minimale et maximale de la précision en azimut à l'élévation $\Delta_m$ ainsi qu'une précision $\sigma_\Delta$ en $\Delta_m$=0.,

calculer la taille de chaque réseau $D_i$ en tenant compte des axes des ellipses d'incertitude $\sigma_{d,i}$ dans l'espace du vecteur d'onde qui dépendent des axes de l'ellipse dans l'espace de l'azimut et de l'élévation qui sont donnés dans le cahier des charges : $D_i = \left(\left(\sqrt{\alpha/8N}\right)/\sigma_{d,i}\right)\lambda$ pour $1 \leq i \leq d$,

avec N le nombre de capteurs, $\alpha$ un paramètre dépendant du type de performance comme indiqué dans Tableau-1, $\lambda$ la longueur d'onde

déterminer la matrice de corrélation $\mathbf{D}_{pp}^{directif}$ en utilisant

$$\mathbf{D}_{pp}^{\text{directif}} = \sum_{i=1}^{d} \left( D_i \right)^2 \mathbf{h}_i \mathbf{h}_i^{H}$$

Où $(D_i)^2$ et $\mathbf{h}_i$ sont respectivement les valeurs propres et vecteurs propres de $D_{pp}^{directif}$ et les $\mathbf{h}_i$ dépendent de $\theta_{directif}$

Déterminer la position $\mathbf{p}_{d,n}$ de chaque capteur n du réseau directif, en effectuant $p_{d,n}^{directif} = (D_{pp}^{directif})^{1/2} D_{pp}^{-1/2} (p_{d,n} - \bar{p})$

tester si les valeurs des positions des capteurs vérifient les conditions techniques données dans le cahier des charges et si non, faire varier la valeur de i en i+1, $i=i+1$ et si $i<I$ alors retourner à l'étape de tirage d'un réseau initial

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1 représente un réseau de capteurs ainsi que les signaux émis par l'émetteur et se propageant vers un réseau de capteurs,
- La figure 2, la représentation d'une incidence d'une source,
- La figure 3, un exemple de schéma simplifié du fonctionnement du procédé selon l'invention,
- La figure 4, un réseau circulaire uniforme à deux dimensions,
- La figure 5, un exemple de réseau en cercles concentriques à deux dimensions
- La figure 6, un exemple de réseau en V avec 2 branches identiques de capteurs paramétrés par l'angle δ entre les 2 branches
- La figure 7, la représentation d'une ouverture physique d'un réseau à deux dimensions.

La description qui suit va être donnée dans le cadre de l'optimisation d'un réseau homogènes composés de N capteurs identiques en présence de plusieurs sources.

### *Modélisation du signal et formulation du problème*

En présence de M sources, le signal en sortie du réseau de *N* capteurs s'écrit de la façon suivante :

$$\mathbf{x}(t) = \begin{bmatrix} x_1(t) \\ \vdots \\ x_N(t) \end{bmatrix} = \sum_{m=1}^{M} \tilde{\mathbf{a}}(\Theta_m) \, \mathrm{s}_m(t) + \mathbf{n}(t) \quad (1)$$

Où $x_n(t)$ est le signal reçu sur le nième capteur, $\mathrm{s}_m(t)$ est le signal de la m-ième source, $\mathbf{n}(t)$ est le bruit additif, $\Theta_m$ est la direction d'arrivée de la source définie (figure 1) et $\tilde{a}(\Theta_m)$ est le vecteur directeur observé. En présence d'erreur de modèle le vecteur $\tilde{\mathbf{a}}(\Theta_m)$ s'écrit

$$\tilde{\mathbf{a}}(\Theta_m) = \mathbf{a}(\Theta_m) + \mathbf{e}_m \quad (2)$$

Où $\mathbf{a}(\Theta_m)$ est le vecteur directeur théorique tel que $a(\Theta_m)^H \mathbf{a}(\Theta_m) = N$ et $\mathbf{e}_m$ est l'erreur de modèle. Selon la figure 1 et sachant que les capteurs sont identiques (ou homogènes), la nième composante de $\mathbf{a}(\Theta)$ s'écrit

$$a_n(\Theta) = \exp\left( j \frac{2\pi}{\lambda} \mathbf{k}(\Theta)^T \mathbf{p}_n \right) \quad (3)$$

Où $\mathbf{p}_n = [x_n \, y_n \, z_n]^T$ est le vecteur de position, $\lambda$ est la longueur d'onde et $\mathbf{k}(\Theta)$ est le vecteur d'onde tel que

$$\mathbf{k}(\Theta) = \begin{bmatrix} u \\ v \\ w \end{bmatrix} \quad \text{avec} \quad \begin{cases} u = \cos(\theta)\cos(\Delta) \\ v = \sin(\theta)\cos(\Delta) \\ w = \sin(\Delta) \end{cases} \quad (4)$$

Où $\Theta = \{\theta, \Delta\}$ dépend de l'azimut $\theta$ et de l'élévation $\Delta$. L'objectif de la goniométrie est d'estimer les paramètres $\Psi_m$ pouvant être égaux soit à la direction $\Theta_m$ soit au vecteur d'onde $\mathbf{k}(\Theta_m)$. Un algorithme de goniométrie donne les estimées $\hat{\Psi}_m$ des sources de direction $\Psi_m$ à partir d'un critère dépendant des paramètres $\Psi = \Theta$ ou $\mathbf{k}(\Theta)$. Les performances peuvent être données en terme

- de précision avec

  - le biais $E\left[\hat{\Psi}_m\right] - \Psi_m$

  - la variance ou EQM qui s'écrit $\mathrm{MS}_{\Psi_m} = E\left[\Delta\Psi_m \Delta\Psi_m^{\ T}\right]$ avec $\Delta\Psi_m = \hat{\Psi}_m - \Psi_m$

- de résolution entre deux sources : Présence de deux estimés $\hat{\Psi}_1$ et $\hat{\Psi}_2$ non associées à un lobe secondaire du critère de goniométrie. La résolution sera définit en fonction de la distance $\Delta_{12} = \|\mathbf{k}(\Theta_2) - \mathbf{k}(\Theta_1)\|$ entre 2 sources.
- d'ambiguïté d'ordre $M$: Un réseau est ambiguë mathématiquement lorsqu'il existe au moins une incidence $\Psi^{ambig} \neq \Psi_m$ dont le vecteur directeur $a(\Psi^{ambig})$ appartient à l'espace engendré par les vecteurs directeurs $\mathbf{a}(\Psi_m)$ pour $1 \leq m \leq M$.

Les conditions de directionalité et de précision du cahier des charges en mono-source donneront la forme de l'ellipse d'incertitude. Cette ellipse dépend des statistiques d'ordre 2 des vecteurs de position $\mathbf{p}_n$, ce qui permet alors de transformer un réseau initial suivant les statistiques du cahier des charges par un processus de blanchiment puis coloration.

La résolution de deux sources dépend des statistiques d'ordre 4 de la position des capteurs. De fait des réseaux ayant des performances identiques en mono-source peuvent avoir des performances différentes en résolution. En conséquence, parmi une famille de réseaux à performance identique en mono-source le procédé pourra les classer en fonction de leurs performances de résolution.

D'autre part, on sait que dans une famille de réseaux ayant des performances identiques en mono-source et bi-sources, tous les réseaux n'ont pas la même robustesse aux ambiguïtés. Il faudra alors classer les réseaux de cette famille suivant un critère d'ambiguïtés défini.

En pratique et au regard des objectifs de la goniométrie, le seul paramètre qui donne la direction d'une source n'est pas autre chose que le vecteur d'onde $\mathbf{k}(\Theta)$.

Dans ces conditions le processus d'optimisation de réseaux sera basé sur les statistiques de bonne estimation de ce vecteur. Une hypothèse est de poser $\Psi = \mathbf{k}(\Theta)$. Dans le cas d'un réseau $d$-D on s'intéressera uniquement aux composantes du vecteur d'onde se projetant dans l'espace engendré par les positions des capteurs. En conséquence

- Pour un réseau plan 2-D: L'ellipse d'incertitude sera caractérisée par son grand axe, petit axe et son angle d'orientation.
- Pour un réseau linéaire 1-D: L'ellipse d'incertitude sera caractérisée uniquement par l'écart type et le biais de la précision d'estimation de la composante du vecteur d'onde se projetant sur la ligne.
- Pour un réseau linéaire 3-D : L'ellipse d'incertitude est dans le cas général un ellipsoïde qui contient 3 axes et deux angles. On peut aussi dans ce cas caractériser les performances pour les composantes du vecteur d'onde se projetant dans le plan le plus proche du réseau 3D. En effet comme le vecteur d'onde est normé la 3-ième composante se déduit des autres.

*Outils de base permettant l'optimisation de réseau*

**Outils d'omni-directionalité et de précision déduites des performances mono-source**

La matrice de corrélation de $\Delta\Psi_m = \hat{\Psi}_m - \Psi_m$ a l'expression suivante en mono-source

$$\mathrm{MS}_{\Psi_m} = \mathrm{E}\left[\Delta\Psi_m \Delta\Psi_m{}^T\right] = \alpha\mathbf{H}\left(\Psi_m\right)^{-1}$$

$$\mathbf{H}\left(\Psi_m\right) = 2\dot{\mathbf{A}}^H \Pi\left(\Psi_m\right)\dot{\mathbf{A}}$$

avec                                                                    (5)

$$\dot{\mathbf{A}} = \left[\frac{\delta\mathbf{a}\left(\Psi_m\right)}{\partial\Psi_m(1)} \quad \cdots \quad \frac{\delta\mathbf{a}\left(\Psi_m\right)}{\partial\Psi_m(d)}\right]$$

$$\Pi\left(\Psi_m\right) = \mathbf{I}_N - \frac{\mathbf{a}\left(\Psi_m\right)\mathbf{a}\left(\Psi_m\right)^H}{\mathbf{a}\left(\Psi_m\right)^H \mathbf{a}\left(\Psi_m\right)}$$

Sachant que $\Psi_m$ est un vecteur de dimension $d\times 1$. Les valeurs du coefficient $\alpha$ indiquées dans le tableau 1 suivant dépendent du type de performances considérées.

**Tableau 1 : Tableau des paramètres à associer aux critères de précision mono-source sachant que E[n($t$)n($t$)$^H$]= $\sigma^2\mathbf{I}_N$**

| Type de Performances | | Valeur du coefficient $\alpha$ |
|---|---|---|
| **Borne de Cramer RAO** *A partir de* x($t_k$) *pour* 1$\leq k\leq K$ | *Cas Stochastique* | $\alpha = \dfrac{1+\left(\dfrac{Nr_{ss}}{\sigma^2}\right)^{-1}}{K\left(\dfrac{r_{ss}}{\sigma^2}\right)}$ avec $r_{ss} = E\left[\left|s_m\left(t_k\right)\right|^2\right]$ |
| | *Cas déterministe* | $\alpha = \dfrac{1}{K\left(\dfrac{\hat{r}_{ss}}{\sigma^2}\right)}$ avec $\hat{r}_{ss} = \dfrac{1}{K}\sum_{k=1}^{K}\left|s_m\left(t_k\right)\right|^2$ |
| **Performance de MUSIC** | *A temps d'intégration fini avec* **x**($t_k$) *pour* 1$\leq k\leq K$ | $\alpha = \dfrac{1}{K\left(\dfrac{r_{ss}}{\sigma^2}\right)}$ |
| | *En présence d'erreur de modèle* | $\alpha = \dfrac{E\left[\mathbf{e}_m{}^H\mathbf{e}_m\right]}{N}$ |

Généralement en présence d'un paramètre multi-dimensionnel $\Psi_m$, les performances sont données suivant un ellipsoïde d'incertitude qui dépend des éléments propres de la matrice $\mathrm{MS}_{\Psi_m}$ ce qui revient à décomposer la variable $\Delta\Psi_m$ en d variables indépendantes $\Delta\Psi_m{}^{(i)}$ telles que :

$$MS_{\Psi_m} = \sum_{i=1}^{d} \left( \sigma_{\Psi_m^{(i)}} \right)^2 \mathbf{h}_{\Psi_m^{(i)}} \mathbf{h}_{\Psi_m^{(i)}}^{H}$$

où

$$\Delta\Psi_m^{(i)} = \mathbf{h}_{\Psi_m^{(i)}}^{H} \Delta\Psi_m \quad \text{avec} \quad \left( \sigma_{\Psi_m^{(i)}} \right)^2 = E\left[ \left( \Delta\Psi_m^{(i)} \right)^2 \right] \qquad (6)$$

Où $\left( \sigma_{\Psi_m^{(i)}} \right)^2$ et $\mathbf{h}_{\Psi_m^{(i)}}$ sont respectivement les valeurs propres et vecteurs propres de $MS_{\Psi_m}$. Lorsque d=2 on obtient une ellipse ayant pour grand axe $\sigma_{\Psi_m^{(i_{max})}} = \max_i \left( \sigma_{\Psi_m^{(i)}} \right)$, pour petit axe $\sigma_{\Psi_m^{(i_{min})}} = \max_i \left( \sigma_{\Psi_m^{(i)}} \right)$ et une orientation par rapport à la première composante de $\Delta\Psi_m$ valant $\varphi = angle\left( \mathbf{h}_{\Psi_m^{(i)}}, \begin{bmatrix} 1 & 0 \end{bmatrix}^T \right)$. Dans la suite du paragraphe le lien entre la matrice $MS_{\Psi_m}$ (matrice dont les éléments propres déterminent l'ellipsoïde d'incertitude) et les positions $p_n$ des capteurs est établi afin d'obtenir une relation avec les paramètres de l'ellipse. Le lien est établi dans un premier temps pour $\Psi_m = k (\Theta_m)$. La matrice H (k ($\Theta_m$)) s'écrit

$$H\left( \mathbf{k}\left( \Theta_m \right) \right) = 2N \left( \frac{2\pi}{\lambda} \right)^2 \mathbf{D}_{pp}$$

$$\mathbf{D}_{pp} = \frac{1}{N} \sum_{n=1}^{N} \left( \mathbf{p}_n - \overline{\mathbf{p}} \right) \left( \mathbf{p}_n - \overline{\mathbf{p}} \right)^T \quad \text{avec} \quad \overline{\mathbf{p}} = \frac{1}{N} \sum_{n=1}^{N} \mathbf{p}_n \qquad (7)$$

Cette dernière expression montre que la matrice $MS_{k(\Theta_m)}$ est indépendante de la valeur du vecteur d'onde k ($\Theta_m$) en dépendant des statistiques d'ordre deux (D$_{pp}$) des positions $\mathbf{p}_n$ des capteurs. Un réseau est $d$-D lorsque le rang de la matrice $\mathbf{D}^*_{pp}$ vaut d. Sans rien changer à la généralité du problème, un réseau est dit une dimension ou 1-D lorsque $y_n=z_n =0$ et deux dimensions ou 2-D lorsque $z_n =0$. Pour un réseau $d$-D, on ne s'intéressera qu'à la version projetée $k_d$ ($\Theta_m$) du vecteur d'onde $\mathbf{k}(\Theta_m)$ sur l'espace engendré par les positions des capteurs. Dans le tableau suivant, on résume quelques exemples pour les expressions des vecteurs d'onde $k_d(\Theta_m)$ et des positions des capteurs $\mathbf{p}_n$

*Tableau 1 - Valeur de $k_d(\Theta_m)$ et $\mathbf{p}_n$ pour $1 \leq d \leq 3$*

| Dimension du réseau | $\mathbf{k}_d (\Theta)$ | $\mathbf{p}_n$ | $\mathbf{p}_{d,n}$ |
|---|---|---|---|
| **1-D ou linéaire** | $k_1(\Theta)=u$ <br><br> avec $u=\cos(\theta)\cos(\Delta)$ | $\mathbf{p}_n = \begin{bmatrix} x_n \\ 0 \\ 0 \end{bmatrix}$ | $\mathbf{p}_{1,n} = x_n$ |
| **2-D ou plan** | $\mathbf{k}_2(\Theta) = \begin{bmatrix} u \\ v \end{bmatrix}$ <br><br> avec $v=\sin(\theta)\cos(\Delta)$ | $\mathbf{p}_n = \begin{bmatrix} x_n \\ y_n \\ 0 \end{bmatrix}$ | $\mathbf{p}_{2,n} = \begin{bmatrix} x_n \\ y_n \end{bmatrix}$ |

(suite)

| Dimension du réseau | $k_d(\Theta)$ | $\mathbf{p}_n$ | $\mathbf{p}_{d,n}$ |
|---|---|---|---|
| 3-D | $k_3(\Theta) = k(\Theta) = \begin{bmatrix} u \\ v \\ w \end{bmatrix}$ <br><br> avec w=sin($\Delta$) | $\mathbf{p}_n = \begin{bmatrix} x_n \\ y_n \\ z_n \end{bmatrix}$ | $\mathbf{p}_{3,n} = \mathbf{p}_n$ |

Suivant le tableau 2, l'expression du vecteur directeur devient

$$a_n(\Theta) = \exp\left( j\frac{2\pi}{\lambda} k_d(\Theta)^T \mathbf{p}_{d,n} \right) \quad (8)$$

Les matrices de corrélation des $\mathbf{p}_{d,n}$ et $\mathbf{p}_n$ sont notées de la même manière, en conséquence

$$H\left(k_d(\Theta_m)\right) = 2N\left(\frac{2\pi}{\lambda}\right)^2 \mathbf{D}_{pp}$$

avec                                                                                                        (9)

$$\mathbf{D}_{pp} = \frac{1}{N}\sum_{n=1}^{N}\left(\mathbf{p}_{d,n} - \overline{\mathbf{p}}\right)\left(\mathbf{p}_{d,n} - \overline{\mathbf{p}}\right)^T \text{ avec } \overline{\mathbf{p}} = \frac{1}{N}\sum_{n=1}^{N}\mathbf{p}_{d,n}$$

la matrice de corrélation de l'expression (7) devient donc :

$$MS_{k_d(\Theta_m)} = \frac{\alpha}{2N}\left(\frac{2\pi}{\lambda}\right)^{-2}\left(\mathbf{D}_{pp}\right)^{-1} \quad (10)$$

La décomposition en éléments propres de $MS_{k_d(\Theta_m)}$ dépend directement des éléments propres (($D_i)^2$ et $h_i$) de $D_{pp}$. Plus précisément on obtient

$$MS_{k_d(\Theta_m)} = \sum_{i=1}^{d}\left(\sigma_{d,i}\right)^2 \mathbf{h}_i\mathbf{h}_i^H \text{ avec } \sigma_{d,i} = \frac{\sqrt{\alpha}}{\sqrt{8N}\pi\left(\frac{D_i}{\lambda}\right)} \quad (11)$$

Sachant que la décomposition en éléments propres de $\mathbf{D}_{pp}$ est la suivante

$$\mathbf{D}_{pp} = \sum_{i=1}^{d}\left(D_i\right)^2 \mathbf{h}_i\mathbf{h}_i^H \quad\quad (12)$$

Où $(D_i)^2$ et $\mathbf{h}_i$ sont respectivement les valeurs propres et les vecteurs propres de $D_{pp}$. L'objectif est de calculer les valeurs de $\sigma_{d,i}$ et les $\mathbf{h}_i$ qui définissent les axes des ellipses d'incertitude à partir des performances données dans le cahier des charges. La description qui suit établit le lien entre $\sigma_{d,i}$ et les $\mathbf{h}_i$ et les performances du cahier des charges.
On dira que l'on est en présence d'un réseau omni-directionnel lorsque

$$D_1 = \cdots = D_d = D_0 \text{ et donc que } \mathbf{D}_{pp} = \left(D_0\right)^2 \mathbf{I}_d \quad (13)$$

Dans l'équation (15) la notion d'omnidirectionnalité est définie à partir des deux critères suivant sur la précision d'estimation du vecteur d'onde

- les composantes de l'erreur d'estimation du vecteur d'onde sont indépendantes.
- les composantes de l'erreur d'estimation du vecteur d'onde ont la même variance.

Il est possible de montrer que ce critère d'omni-directionnalité est équivalent à dire que la moyenne statistique de l'angle formé entre les vecteurs $\mathbf{k}_d(\Theta)$ et $\hat{\mathbf{k}}_d(\Theta)$ est indépendante du vecteur d'onde $\mathbf{k}_d(\Theta)$. Plus précisément en notant $\mathbf{k} = \mathbf{k}_d(\Theta)$ et $\hat{\mathbf{k}} = \hat{\mathbf{k}}_d(\Theta)$, le critère C(k) suivant

$$C(\mathbf{k}) = E\left[d\left(\mathbf{k}, \hat{\mathbf{k}}\right)\right] \text{ avec}$$

$$d(\mathbf{k}, \hat{\mathbf{k}}) = 1 - \frac{\left|\mathbf{k}^H \hat{\mathbf{k}}\right|^2}{\left(\mathbf{k}^H \mathbf{k}\right)\left(\hat{\mathbf{k}}^H \hat{\mathbf{k}}\right)} \quad (14)$$

est indépendant de $\mathbf{k} = \mathbf{k}_d(\Theta)$. Cela est équivalent à dire que les valeurs propres de $\mathbf{MS}_{\mathbf{k}_d(\Theta_m)}$ sont identiques et donc que $D_1 = \cdots = D_d$. Dans la suite du développement les éléments propres de $\mathbf{MS}_{\mathbf{k}_d(\Theta_m)}$ permettent de définir entièrement les ellipses (ou ellipsoïdes) d'incertitudes qui définissent entièrement la directionalité d'un réseau de capteurs.

Sachant que pour un réseau omnidirectionnel

- UCA (Uniform Circular Array) de diamètre $D_{ph}$ où $d=2$ que $D_0 = D_{ph} / \sqrt{8}$

- USA (Uniform Spherical Array) de diamètre $D_{ph}$ où $d=3$ que $D_0 = D_{ph} / \sqrt{16}$ On en déduit que l'ouverture équivalente du réseau de dimension d, $D_{d,e}$ où l'indice e est équivalent à UCA (ou USA) ), est l'ouverture physique $D_{ph}$ du réseau $d$-D uniforme omni-directionnel équivalent. En conséquence

$$D_{d,e} = 2^{(d+1)/2} D_0 = 2^{(d+1)/2} \sqrt{\frac{trace(\mathbf{D}_{pp})}{d}} \quad \text{avec } \mathbf{D}_{pp}{}^{omni} = \frac{\left(D_{d,e}\right)^2}{2^{d+1}} \mathbf{I}_d \quad (15)$$

Lorsqu'un réseau est omni-directionnel cela veut dire que chacune des composantes du vecteur d'onde a la même variance d'estimation et que les estimés des différentes composantes sont indépendantes. En conséquence les performances d'un réseau omni-directionnel vérifient

$$\mathbf{MS}_{\mathbf{k}_d(\Theta_m)} = \left(\sigma_d\right)^2 \mathbf{I}_d \quad \text{où } \sigma_d = \frac{\sqrt{\alpha}}{\sqrt{2^{(2-d)} N} \pi \left(\dfrac{D_{d,e}}{\lambda}\right)} \quad (16)$$

Cette dernière expression montre que l'erreur quadratique moyen ou EQM $\sigma_d$ de chacune des composantes du vecteur d'onde est inversement proportionnel à l'ouverture équivalente $D_{d,e}$ du réseau. En conséquence, pour transformer un réseau de capteurs de dimension $d$-D ayant chacun une position $\mathbf{p}_{d,n}$ avec une matrice de corrélation $\mathbf{D}_{pp}$ en un réseau de capteurs de position $\mathbf{p}_{d,n}{}^{omni}$ omnidirectionnel ayant une ouverture équivalente $D_{d,e}$ fixant la précision, il suffit d'effectuer la transformation matricielle suivante

$$\mathbf{p}_{d,n}{}^{omni} = \left(\mathbf{D}_{pp}{}^{omni}\right)^{1/2} \mathbf{D}_{pp}{}^{-1/2} \mathbf{p}_{d,n} = \frac{D_{d,e}}{2^{(d+1)/2}} \mathbf{D}_{pp}{}^{-1/2} \left(\mathbf{p}_{d,n} - \bar{\mathbf{p}}\right) \quad (17)$$

Toutefois suivant les requêtes du cahier des charges il n'est pas forcément souhaitable de concevoir des réseaux omni-directionnels. Ainsi il est possible d'optimiser un réseau ayant une directivité plus ou moins importante dans une direction $\Theta_m$. Le cahier des charges peut donner, par exemple, un écart type minimal et maximal de l'azimut pour une source dont l'élévation d'arrivée vaut $\Delta_m$. Pour cela il est nécessaire de revenir à la notion d'ellipse d'incertitude dans l'espace des angles d'arrivées $\Theta_m$ qui dépend des éléments propres de la matrice $\mathrm{MS}_{\Theta_m}$ : L'objectif est alors de calculer la matrice $\mathbf{D}_{pp}$ qui permet d'obtenir la matrice de performances $\mathrm{MS}_{\Theta_m}$ dans l'espace des angles d'arrivées. Sachant que les équations (12)(13) ont établi le lien entre les éléments propres de $\mathbf{D}_{pp}$ et ceux de la matrice $\mathrm{MS}_{\mathbf{k}_d(\Theta_m)}$ définissant l'ellipse d'incertitude dans l'espace du vecteur d'onde, il suffit d'établir la relation entre les éléments propres de $\mathrm{MS}_{\mathbf{k}_d(\Theta_m)}$ et $\mathrm{MS}_{\Theta_m}$ pour obtenir le lien entre $\mathrm{MS}_{\Theta_m}$ et $\mathrm{D}_{pp}$. Plus particulièrement le procédé définira des paramètres de directivité qui conditionneront les éléments propres des matrices $\mathrm{MS}_{\mathbf{k}_d(\Theta_m)} = \alpha\mathbf{H}\left(\mathbf{k}_d\left(\Theta_m\right)\right)^{-1}$ et $\mathrm{MS}_{\Theta_m} = \alpha\mathbf{H}\left(\Theta_m\right)^{-1}$. La matrice $\mathrm{H}(\Theta_m)$ s'écrit de la manière suivante en fonction de la matrice $\mathbf{H}(\mathbf{k}_d(\Theta_m))$ qui est de rang plein

$$\mathbf{H}\left(\Theta_m\right) = \mathbf{J}_d\left(\Theta_m\right)^H \mathbf{H}\left(\mathbf{k}_d\left(\Theta_m\right)\right)\mathbf{J}_d\left(\Theta_m\right) \quad (18)$$

Où $\mathbf{J}_d(\Theta_m)$ est le Jacobien. Afin que la matrice $\mathrm{H}(\Theta_m)$ soit de rang plein, le nombre de paramètres angulaire de $\Theta_m$ doit être inférieur ou égal à d, en conséquence

- Cas des réseaux 3-D ($d$=3): $\Theta_m = \{\theta_m, \Delta_m\}$
- Cas des réseaux 2-D ($d$=2): $\Theta_m = \{\theta_m, \Delta_m\}$

- Cas des réseaux 1-D ($d$=1): $\Theta_m = \Theta_{m|\Delta_0} = \{\theta_m\}$ sachant que $\Delta_m = \Delta_0$

- Cas des réseaux 1-D($d$=1): $\Theta_m = \Theta_{m|\theta_0} = \{\Delta_m\}$ sachant que $\theta_m = \theta_0$

Le cas $d$=1 est en réalité un cas dégénéré. Dans le tableau suivant, on résume les valeurs possibles du Jacobien en fonction de la dimension d du réseau

**Tableau 2 - Valeur du Jacobien en fonction de la dimension du réseau**

| Dimension du réseau | | $\mathbf{J}_d(\Theta_m) = \mathbf{K}_d(\Theta_m)\Lambda_d$ |
|---|---|---|
| 1-D ou linéaire | $\Theta_{m\mid\Delta_0} = \{\theta_m\}$ | $\mathbf{K}_1 = 1$ <br> $\Lambda_1 = \cos(\Delta_0)\sin(\theta_m)$ |
| | $\Theta_{m\mid\theta_0} = \{\Delta_m\}$ | $\mathbf{K}_1 = 1$ <br> $\Lambda_1 = \sin(\Delta_m)\cos(\theta_0)$ |
| 2-D ou plan | | $\mathbf{K}_2(\Theta_m) = \left[\mathbf{k}_2\left(\theta_m + \dfrac{\pi}{2}, 0\right) \quad \mathbf{k}_2(\theta_m, 0)\right]$ <br><br> $\Lambda_2(\Theta_m) = \begin{bmatrix} \cos(\Delta_m) & 0 \\ 0 & \sin(\Delta_m) \end{bmatrix}$ |
| 3-D | | $\mathbf{K}_3(\Theta_m) = \left[\mathbf{k}\left(\theta_m + \dfrac{\pi}{2}, 0\right) \quad \mathbf{k}\left(\theta_m, \Delta_m + \dfrac{\pi}{2}\right)\right]$ <br><br> $\Lambda_3 = \begin{bmatrix} \cos(\Delta_m) & 0 \\ 0 & 1 \end{bmatrix}$ |

La matrice $\mathrm{MS}_{\Theta_m}$ peut alors s'écrire

$$\mathrm{MS}_{\Theta_m} = \left(\sum_{i=1}^{d}(\sigma_{d,i})^{-2}\mathbf{h}_i(\Theta_m)\mathbf{h}_i(\Theta_m)^H\right)^{-1} \text{ avec } \begin{cases} \mathbf{h}_i(\Theta_m) = \Lambda_d^{H}\mathbf{K}_d(\Theta_m)^{H}\mathbf{h}_i \\ \sigma_{d,i} = \dfrac{\sqrt{\alpha}}{\sqrt{8N}\pi\left(\dfrac{D_i}{\lambda}\right)} \end{cases} \quad (19)$$

Dans le cas omni-directionnel où $\sigma_{d,i} = \sigma_d$ pur $1 \leq i \leq d$ (voir (18)), l'expression (19) ci-dessus devient :

$$\mathrm{MS}_{\Theta_m} = (\sigma_d)^2 \Lambda_d^{-2} \text{ avec } \sigma_d = \dfrac{\sqrt{\alpha}}{\sqrt{2^{(2-d)}N}\pi\left(\dfrac{D_{d,e}}{\lambda}\right)} \quad (20)$$

car les matrices $\mathbf{K}_d(\Theta_m)$ sont unitaires. Sachant que les matrices $\Lambda_d$ sont diagonales, les estimations des azimuts et des élévations sont indépendantes (ou découplées) pour des réseaux omni-directionnels lorsque $d > 1$. Dans ces conditions, les axes de l'ellipse d'incertitude dans l'espace des angles d'azimuth $\theta_m$ et d'élévation $\Delta_m$, $\Theta_m = \{\theta_m, \Delta_m\}$ sont définis par

les écarts types $\sigma_\theta = \sqrt{E\left[\left(\theta_m - \hat{\theta}_m\right)^2\right]}$ et $\sigma_\Delta = \sqrt{E\left[\left(\Delta_m - \hat{\Delta}_m\right)^2\right]}$ respectivement des azimuts et des élévations. Le tableau suivant résume les différentes valeurs possibles de $\sigma_\theta$ et $\sigma_\Delta$ pour un réseau omni-directionnel en fonction de la dimension du réseau

| Dimension du réseau | | $\sigma_\theta$ | $\sigma_\Delta$ |
|---|---|---|---|
| 1-D ou linéaire | $\Theta_{m\Delta_0} = \{\theta_m\}$ | $\sigma_\theta = \dfrac{\sigma_1}{\left\lvert\cos(\Delta_0)\sin(\theta_m)\right\rvert}$ | Pas défini |
| | $\Theta_{m\theta_0} = \{\Delta_m\}$ | Pas défini | $\sigma_\Delta = \dfrac{\sigma_1}{\left\lvert\sin(\Delta_m)\cos(\theta_0)\right\rvert}$ |
| 2-D ou plan | | $\sigma_\theta = \dfrac{\sigma_2}{\left\lvert\cos(\Delta_m)\right\rvert}$ | $\sigma_\Delta = \dfrac{\sigma_2}{\left\lvert\sin(\Delta_m)\right\rvert}$ |
| 3-D | | $\sigma_\theta = \dfrac{\sigma_3}{\left\lvert\cos(\Delta_m)\right\rvert}$ | $\sigma_\Delta = \sigma_3$ |

**Tableau 3 - Précision en azimut et élévation d'un réseau omni-directionnel**

Dans le cas où les réseaux sont non omnidirectionnels, la directionalité sera définie à partir des incidences $\Theta_m$ où l'estimation de l'azimut et de l'élévation sont découplées. Ce découplage est vérifié lorsque

$$\mathbf{K}_d\left(\Theta_m\right)^H \mathbf{h}_i = \mathbf{e}_\theta = \begin{bmatrix} 1 \\ 0 \end{bmatrix} \quad \text{ou} \quad \mathbf{e}_\Delta = \begin{bmatrix} 0 \\ 1 \end{bmatrix} \quad \text{pour } 1 \le i \le d \quad (21)$$

Lorsque la condition de l'équation (23) est obtenue, alors

$$\mathrm{MS}_{\Theta_m} = \left(\sum_{i=1}^{d}\left(\sigma_{d,i}\right)^{-2}\mathbf{h}_i\left(\Theta_m\right)\mathbf{h}_i\left(\Theta_m\right)^H\right)^{-1} \text{avec} \begin{cases} \mathbf{h}_i\left(\Theta_m\right) = \Lambda_d^{\,H}\mathbf{K}_d\left(\Theta_m\right)^H\mathbf{h}_i \\ \sigma_{d,i} = \dfrac{\sqrt{\alpha}}{\sqrt{8N}\pi\left(\dfrac{D_i}{\lambda}\right)} \end{cases} \quad (22)$$

<u>**Dans le cas du réseau 2- D,**</u> la condition de l'équation (23) est vérifiée lorsque $\mathbf{h}_i$ est orthogonal à

$\mathbf{k}_2\left(\theta_m + \dfrac{\pi}{2}, 0\right)$ ou $\mathbf{k}_2\left(\theta_m, 0\right)$. En posant $\mathbf{h}_1 = \mathbf{k}_2\left(\theta_m + \dfrac{\pi}{2}, 0\right)$ et $\mathbf{h}_1 = \mathbf{k}_2\left(\theta_m, 0\right)$, pour $\Theta_m = \{\theta_m, \Delta_m\}$

$$\mathrm{MS}_{\Theta_m = \{\theta_m, \Delta_m\}} = (\sigma_\theta)^2 \mathbf{e}_\theta \mathbf{e}_\theta^{\ H} + (\sigma_\Delta)^2 \mathbf{e}_\Delta \mathbf{e}_\Delta^{\ H} \quad \text{avec} \quad \begin{cases} \sigma_\theta = \dfrac{\sigma_{d,1}}{\left|\cos(\Delta_m)\right|} \\[3mm] \sigma_\Delta = \dfrac{\sigma_{d,2}}{\left|\sin(\Delta_m)\right|} \end{cases} \quad (23)$$

et pour $\Theta_m = \{_m + /\, 2, \Delta_m\}$

$$\mathrm{MS}_{\Theta_m = \left\{\theta_m + \frac{\pi}{2}, \Delta_m\right\}} = (\sigma_\theta)^2 \mathbf{e}_\theta \mathbf{e}_\theta^{\ H} + (\sigma_\Delta)^2 \mathbf{e}_\Delta \mathbf{e}_\Delta^{\ H} \quad \text{avec} \quad \begin{cases} \sigma_\theta = \dfrac{\sigma_{d,2}}{\left|\cos(\Delta_m)\right|} \\[3mm] \sigma_\Delta = \dfrac{\sigma_{d,1}}{\left|\sin(\Delta_m)\right|} \end{cases} \quad (24)$$

D'après (25)(26) en fixant l'élévation à $\Delta_m$, on montre que l'écart type en azimut $\sigma_\theta$ est bornée de la manière suivante

$$\sigma_{\theta_{\min}} \le \sigma_\theta \le \sigma_{\theta_{\max}} \quad \text{avec} \quad \begin{cases} \sigma_{\theta_{\min}} = \dfrac{\sigma_{d,1}}{\left|\cos(\Delta_m)\right|} \\[3mm] \sigma_{\theta_{\max}} = \dfrac{\sigma_{d,2}}{\left|\cos(\Delta_m)\right|} \end{cases} \quad (25)$$

Lorsque $\sigma_{d,1} \le \sigma_{d,2}$. On peut alors envisager un processus de transformation d'un réseau quelconque en un réseau directif. Le cahier des charges peut donner les valeurs minimale et maximale $\sigma_{\theta_{\max}}$ et $\sigma_{\theta_{\min}}$ de la précision en azimut à l'élévation $\Delta_m$. Il est à noter que le rapport $\sigma_{\theta_{\max}} / \sigma_{\theta_{\min}}$ est un facteur de directivité car lorsque $\sigma_{\theta_{\max}} = \sigma_{\theta_{\min}}$ le réseau est omni- directionnel. En conséquence, les étapes de transformation d'un réseau initial de dimension 2- D composé de $N$ capteurs de position $p_{2,n}$ en un réseau de directivité choisie sont alors les suivantes. Les deux paramètres du cahier des charges du processus détaillé ci- dessous sont les valeurs minimale et maximale $\sigma_{\theta_{\min}}$ et $\sigma_{\theta_{\max}}$ de la précision en azimut à l'élévation $\Delta_m$. Le cahier des charges donne l'azimut $\theta_{directif} = \theta_m + \dfrac{\pi}{2}$ pour lequel la précision en azimut $\sigma_{\theta_{\min}}$ est minimal. Il est à noter que le processus décrit ci- dessous comprend le cas des réseaux omni- directionnels avec $\sigma_{\theta_{\min}} = \sigma_{\theta_{\max}}$.

---

**Etape (T-2D) n° 1 :** Calcul de la matrice de corrélation $\boldsymbol{D}_{pp}^{init}$ des $\mathbf{p}_{2,n}$ selon l'équation (11).

**Etape (T-2D) n° 2 :** Calcul de $\sigma_{d,1} = \sigma_{\theta_{\min}} |\cos(\Delta_m)|$ et $\sigma_{d,2} = \sigma_{\theta_{\max}} |\cos(\Delta_m)|$ en utilisant (27).

**Etape (T-2D) n°3 :** Calcul des tailles de réseau $D_i$ selon l'équation (13) en effectuant $D_i = \left(\left(\sqrt{\alpha/8N}\right)/\sigma_{d,i}\right)\lambda$

**Etape (T-2D) n°4 :** Calcul de la matrice de corrélation $\mathbf{D}_{pp}{}^{directif}$ en utilisant (12)

$$\mathbf{D}_{pp}{}^{directif} = (D_1)^2 \mathbf{k}_2\left(\theta_m + \frac{\pi}{2}, 0\right) \mathbf{k}_2\left(\theta_m + \frac{\pi}{2}, 0\right)^H + (D_2)^2 \mathbf{k}_2(\theta_m, 0) \mathbf{k}_2(\theta_m, 0)^H$$

(26)

---

(suite)

(Les directions des Axes de l'ellipse d'incertitude sont données par le cahier des charges avec $\theta_{directif} = \theta_m + \dfrac{\pi}{2}$ qui donne la direction dans laquel la précision en azimut est minimale)

**Etape (T-2D) n°5** : Calcul de la position des capteurs du réseau directif en effectuant

$$\mathbf{p}_{2,n}{}^{directif} = \left(\mathbf{D}_{pp}{}^{directif}\right)^{1/2} \mathbf{D}_{pp}{}^{-1/2}\left(\mathbf{p}_{2,n} - \overline{\mathbf{p}}\right) \quad (27)$$

**Dans le cas du réseau 3- D,** la condition de l'équation (23) est vérifiée lorsque $\mathbf{h}_i$ est orthogonal à

$$\mathbf{k}\left(\theta_m + \frac{\pi}{2}, 0\right) \text{ ou } \mathbf{k}\left(\theta_m, \Delta_m + \frac{\pi}{2}\right).. \text{ En posant } \mathbf{h}_1 = \mathbf{k}\left(\theta_m + \frac{\pi}{2}, 0\right),$$

$$\mathbf{h}_2 = \mathbf{k}\left(\theta_m, \frac{\pi}{2}\right) \text{ et } \mathbf{h}_3 = \mathbf{k}\left(\theta_m, 0\right), \text{ on obtient pour } \Theta_m = \{\theta_m, \Delta_m\} :$$

$$(28)$$

$$\mathrm{MS}_{\Theta_m = \{\theta_m, \Delta_m\}} = \left(\sigma_{\theta_1}\right)^2 \mathbf{e}_\theta \mathbf{e}_\theta{}^H + \left(\sigma_{\Delta_1}\right)^2 \mathbf{e}_\Delta \mathbf{e}_\Delta{}^H \text{ avec } \begin{cases} \sigma_{\theta_1} = \dfrac{\sigma_{d,1}}{\left|\cos\left(\Delta_m\right)\right|} \\ \sigma_{\Delta_1} = \sqrt{\left(\sigma_{d,2}\right)^2 \cos\left(\Delta_m\right)^2 + \left(\sigma_{d,3}\right)^2 \sin\left(\Delta_m\right)^2} \end{cases}$$

Et pour $\Theta_m = \{\theta_m + \pi/2, \Delta_m\}$,

$$(29)$$

$$\mathrm{MS}_{\Theta_m = \left\{\theta_m + \frac{\pi}{2}, \Delta_m\right\}} = \left(\sigma_{\theta_2}\right)^2 \mathbf{e}_\theta \mathbf{e}_\theta{}^H + \left(\sigma_{\Delta_2}\right)^2 \mathbf{e}_\Delta \mathbf{e}_\Delta{}^H \text{ avec } \begin{cases} \sigma_{\theta_2} = \dfrac{\sigma_{d,3}}{\left|\cos\left(\Delta_m\right)\right|} \\ \sigma_{\Delta_2} = \sqrt{\left(\sigma_{d,1}\right)^2 \sin\left(\Delta_m\right)^2 + \left(\sigma_{d,2}\right)^2 \cos\left(\Delta_m\right)^2} \end{cases}$$

En fixant l'élévation à $\Delta_m$, on peut montrer que l'écart type $\sigma_\theta$ vérifie

$$\sigma_{\theta_{\min}} \le \sigma_\theta \le \sigma_{\theta_{\max}} \text{ avec } \begin{cases} \sigma_{\theta_{\min}} = \dfrac{\sigma_{d,1}}{\left|\cos\left(\Delta_m\right)\right|} \\ \sigma_{\theta_{\max}} = \dfrac{\sigma_{d,3}}{\left|\cos\left(\Delta_m\right)\right|} \end{cases} \quad (30)$$

Lorsque $\sigma_{d,1} \le \sigma_{d,3}$. On remarque de plus que $\sigma_{\Delta_1} = \sigma_{\Delta_2} = \sigma_{d,2}$ en $\Delta_m = 0$. Un processus de transformation d'un réseau quelconque en un réseau directif peut alors être envisagé à partir de paramètres contenus dansun cahier des charges. Le cahier des charges peut donner les valeurs minimale et maximale $\sigma_{\theta_{\min}}$ et $\sigma_{\theta_{\max}}$ de la précision en azimut à l'élévation $\Delta_m$ ainsi qu'une précision $\sigma_\Delta$ en $\Delta_m = 0$. Le cahier des charges donne l'azimut $\theta_{directif} = \theta_m + \dfrac{\pi}{2}$ pour

lequel la précision en azimut $\sigma_{\theta\min}$ est minimal. En conséquence les étapes de transformation d'un réseau initial de dimension 3- D composé de $N$ capteurs de position $p_{3,n}$ en un réseau de directivité choisi sont alors les suivantes :

**Processus de transformation d'un réseau 3- D en un réseau de directif**

**Etape (T-3D) n°1 :** Calcul de la matrice de corrélation $\overline{D_{pp}^{init}}$ des $p_{3,n}$ selon l'équation (11).

**Etape (T-3D) n° 2:** Calcul de $\sigma_{d,1} = \sigma_{\theta\min}|\cos(\Delta_m)|$ et $\sigma_{d,3} = \sigma_{\theta\max}|\cos(\Delta_m)|$ en utilisant 0.

**Etape (T-3D) n° 3:** Calcul de $\sigma_{d,2} = \sigma_\Delta$ pour que la précision en élévation en $\Delta_m = 0$ soit $\sigma_\Delta$.

**Etape (T-3D) n°4:** Calcul des tailles de réseau $D_i$ selon l'équation (13) en effectuant $D_i = \left( \left( \sqrt{\alpha / 8N} \right) / \sigma_{d,i} \right) \lambda$

**Etape (T-3D) n°5 :** Calcul de la matrice de corrélation $\mathbf{D}_{pp}{}^{directif}$ en utilisant (14)

$$\mathbf{D}_{pp}{}^{directif} = (D_1)^2 \, \mathbf{k}\left(\theta_m + \frac{\pi}{2}, 0\right) \mathbf{k}\left(\theta_m + \frac{\pi}{2}, 0\right)^H + (D_2)^2 \, \mathbf{k}\left(\theta_m, \frac{\pi}{2}\right) \mathbf{k}\left(\theta_m, \frac{\pi}{2}\right)^H \quad (31)$$
$$+ (D_3)^2 \, \mathbf{k}\left(\theta_m, 0\right) \mathbf{k}\left(\theta_m, 0\right)^H$$

(Les directions des Axes de l'ellipse d'incertitude sont données par le cahier des charges avec $\theta_{directif} = \theta_m + \dfrac{\pi}{2}$ qui donne la direction dans laquel la précision en azimut est minimale)

**Etape (T-3D) n°6 :** Calcul de la position des capteurs du réseau directif en effectuant

$$\mathbf{p}_{3,n}{}^{directif} = \left( \mathbf{D}_{pp}{}^{directif} \right)^{1/2} \mathbf{D}_{pp}{}^{-1/2} \left( \mathbf{p}_{3,n} - \overline{\mathbf{p}} \right) \quad (32)$$

**Dans le cas du réseau 1-D,** on est dans un cas dégénéré car il faut fixer un des deux paramètres azimut ou élévation. Dans ce cas deux situations d'optimisation de réseau sont envisagées :

- Cas où l'élévation est fixée à $\Delta_0$
- Cas où l'azimut est fixé à $\theta_0$

Lorsque l'élévation est fixée à $\Delta_0$, un cahier des charges donne la précision en azimut $\sigma_\theta$. En conséquence les étapes de transformation d'un réseau initial de dimension 1-D composé de $N$ capteurs de position $\mathbf{p}_{1,n}$ en un réseau de précision choisie sont alors les suivantes :

**Etape (T-1D-$\theta$) n° 1 :** Calcul de la matrice de corrélation $\overline{D_{pp}^{init}} = D_{pp}^{init}$ des $\mathbf{p}_{1,n}$ selon l'équation (11).

**Etape (T-1D-$\theta$) n° 2 :** Calcul de $\sigma_{d,1} = \sigma_\theta |\cos(\Delta_0)\sin(\theta_m)|$ en utilisant les données contenues dans le Tableau 3.

**Etape (T-1D-$\theta$) n° 3:** Calcul des tailles de réseau $D_1$ selon l'équation (13) en effectuant $D_1 = \left( \left( \sqrt{\alpha / 8N} \right) / \sigma_{d,1} \right) \lambda$

**Etape (T-1D-$\theta$) n° 4 :** Calcul de la matrice de corrélation en $\mathbf{D}_{pp}{}^{directif} = D_{pp}{}^{directif}$ en utilisant (14)

$$D_{pp}{}^{directif} = (D_1)^2 \quad (33)$$

**Etape (T-1D-$\theta$) n° 5:** Calcul de la position des capteurs du réseau directif en effectuant

$$\mathbf{p}_{1,n}{}^{directif} = \sqrt{\frac{D_{pp}{}^{directif}}{D_{pp}}} \left( \mathbf{p}_{1,n} - \overline{\mathbf{p}} \right) \quad (34)$$

**Processus de transformation d'un réseau 1-D lorsque l'élévation est fixée**

Lorsque l'azimut est fixé à $\theta_0$, un cahier des charges donne la précision en élévation $\sigma_\Delta$. En conséquence les étapes de transformation d'un réseau initial de dimension 1-D composé de $N$ capteurs de position $p_{l,n}$ en un réseau de précision choisie sont alors les suivantes.

> **Etape (T-1D-$\Delta$) n° 1 :** Calcul de la matrice de corrélation $\mathbf{D}_{pp} = D_{pp}$ des $p_{1,n}$ selon l'équation (11).
> **Etape (T-1D-$\Delta$) n° 2 :** Calcul de $\sigma_{d,1} = \sigma_\Delta \, |\sin(\Delta_m)\cos(\theta_0)|$ en utilisant Tableau 3.
>
> **Etape (T-1D-$\Delta$) n° 3:** Calcul des tailles de réseau $D_1$ selon l'équation (13) en effectuant $D_1 = \left( \left( \sqrt{\alpha/8N} \right) / \sigma_{d,1} \right) \lambda$
>
> **Etape (T-1D-$\Delta$) n° 4 :** Calcul de la matrice de corrélation $\mathbf{D}_{pp}{}^{directif} = \mathbf{D}_{pp}{}^{directif}$ en utilisant (14)
>
> $$D_{pp}{}^{directif} = \left( D_1 \right)^2 \quad (35)$$

> **Etape (T-1D-$\Delta$) n° 5 :** Calcul de la position des capteurs du réseau directif en effectuant
>
> $$\mathbf{p}_{1,n}{}^{directif} = \sqrt{\frac{D_{pp}{}^{directif}}{D_{pp}}} \left( \mathbf{p}_{1,n} - \overline{\mathbf{p}} \right) \quad (36)$$

**Processus de transformation d'un réseau 1-D lorsque l'azimut est fixé**

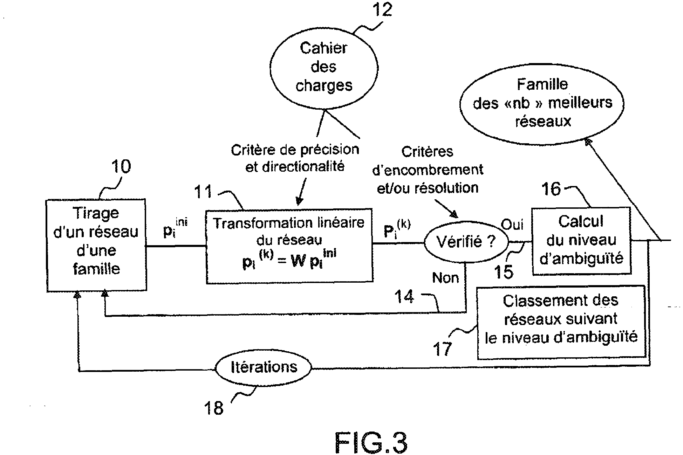

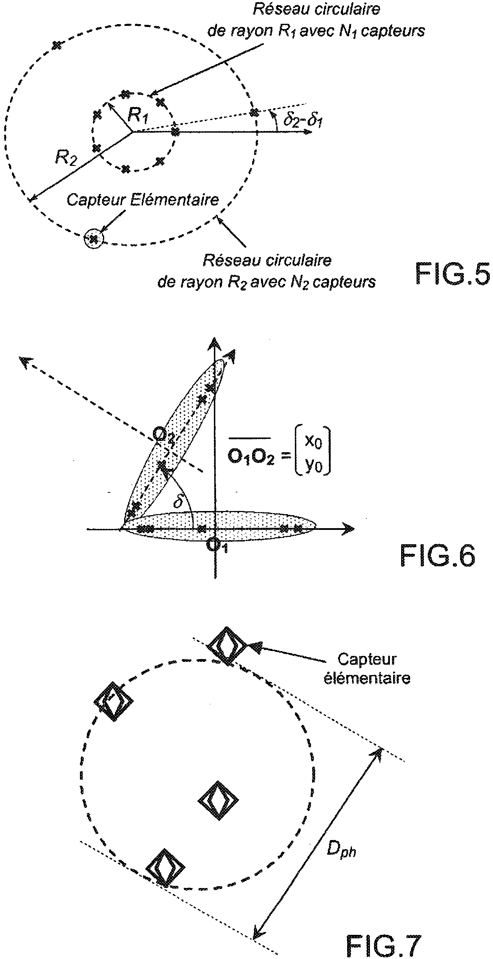

La figure 3 représente un schéma fonctionnel du procédé selon l'invention. Ainsi, la première étape consiste à réaliser le tirage au hasard d'un réseau dans une famille de réseau de capteurs, 10, ce qui conduit à disposer d'une matrice de corrélations des positions $\mathbf{p}_n$ initiales des capteurs que l'on note $p_n{}^{ini}$, puis l'étape suivante 11, consiste à effectuer une transformation linéaire du réseau initial en tenant compte des contraintes données dans le cahier des charges 12 (par exemple $\sigma_{\theta_{\min}}, \sigma_{\theta_{\max}}, \theta_{directif} = \theta_m + \pi/2$ pour l'élévation $\Delta_m$), ce qui génère une matrice composée des positions des capteurs $\mathbf{p}_i{}^{(k)}$. Une étape suivante 13 peut consister à vérifier si d'autres critères imposés dans le fonctionnement du système, par exemple les critères d'encombrement et/ou de résolution sont vérifiés. Si ces critères ne sont pas vérifiés, 14, alors le procédé va procéder au tirage d'un autre réseau de la famille et va lui appliquer toutes les étapes du procédé. Si au contraire, les critères sont respectés, 15, alors le procédé va effectuer un calcul du niveau d'ambiguïté 16 et classer 17 les réseaux suivant, par exemple, le niveau d'ambiguïtés. Le procédé va exécuter des itérations 19, pour trouver le meilleur réseau des réseaux qui ont des caractéristiques identiques en terme de précision, résolution, etc .. en ayant des caractéristiques différentes en ambiguïté. Le tirage dépend de la famille de réseau. Par exemple si on prend les réseaux en V de la figure 6 ou l'angle initial est fixé à $\delta$, le réseau initial est composé de deux branches identiques dont la répartition des capteurs suit une loi normal).

A ce niveau, le procédé a déterminé un ensemble des « nb » meilleurs réseaux appartenant à une famille de réseau. Les meilleurs réseaux sont les réseaux les moins ambiguës qui vérifient les performances du cahier des charges. La suite comprend l'intégration d'éventuelles contraintes supplémentaires pouvant être des critères d'encombrement, des critères de résolution, ou encore d'autres critères relatifs au réseau de capteurs. Le processus qui vient d'être décrit peut aussi être mis en oeuvre avec une contrainte d'encombrement maximal donné dans le cahier des charges.

**Outil de résolution**

Dans ce paragraphe un critère permettant de quantifier la capacité de résolution d'un réseau est construit. Ce critère est, par exemple, établi à partir des performances de résolution de l'algorithme connu MUSIC en présence de deux sources. En présence de $M=2$ sources, la méthode MUSIC appliquée aux observations de l'équation (3) a pour objectif de chercher les $M=2$ minima du critère $J(\Theta)$ tel que

$$\left\{ \hat{\Theta}_1 \text{ et/ou } \hat{\Theta}_2 \right\} = \min_\Theta J(\Theta) \quad \text{avec } J(\Theta) = \frac{\mathbf{a}(\Theta_m)^H \hat{\Pi}_b \mathbf{a}(\Theta_m)}{\mathbf{a}(\Theta_m)^H \mathbf{a}(\Theta_m)} \quad (37)$$

Où $\hat{\Pi}_b$ est le projecteur bruit de la matrice de covariance $\hat{\mathbf{R}}_{xx}$ tel que

$$\hat{\mathbf{R}}_{xx} = \frac{1}{K} \sum_{k=1}^{K} \mathbf{x}(t_k) \mathbf{x}(t_k)^H = \sum_{i=1}^{N} \lambda_i \mathbf{e}_i \mathbf{e}_i^H$$

$$\hat{\Pi}_b = \sum_{i=3}^{N} \mathbf{e}_i \mathbf{e}_i^H \qquad (38)$$

Où $\lambda_1 > \cdots > \lambda_N$ sont les valeurs propres tel que $\lambda_i$ est la valeur propre associé au vecteur propre $\mathbf{e}_i$. On considère que deux sources sont résolues, par exemple, lorsque

$$\vec{J}_{moy} - x\sigma_{moy} > \vec{J}_{12} + x\sigma_{12}$$

$$\text{où} \begin{cases} \overline{J}_{moy} = \mathrm{E}\left[ J_{moy} \right] \\ \overline{J}_{12} = \mathrm{E}\left[ J_{12} \right] \\ \left( \sigma_{moy} \right)^2 = \mathrm{E}\left[ J_{moy}^2 \right] - \left( \overline{J}_{moy} \right)^2 \\ \left( \sigma_{12} \right)^2 = \mathrm{E}\left[ J_{moy}^2 \right] - \left( \overline{J}_{12} \right)^2 \end{cases} \text{sachant que} \begin{cases} J_{12} = \dfrac{J(\Theta_1) + J(\Theta_2)}{2} \\ J_{moy} = J\left( \dfrac{\Theta_1 + \Theta_2}{2} \right) \end{cases} (39)$$

Où $(\overline{J}_{moy}, \sigma_{moy})$ représente la moyenne et l'écart type du critère de MUSIC sur l'incidence moyenne et $(\overline{J}_{12}, \sigma_{12})$ représente la moyenne et l'écart type de $J_{12} = (J(\Theta_1) + J(\Theta_2))/2$. On sait qu'en l'absence d'erreur de modèle pour $K$ infini que $J_{12}=0$ et que $J_{moy}>J_{12}$. On définit la distance entre deux sources d'incidence $\Theta_1$ et $\Theta_2$ par

$$\Delta_{12} = \sqrt{(\mathbf{k}_{12})^H (\mathbf{k}_{12})} \text{ avec } \mathbf{k}_{12} = \mathbf{k}(\Theta_1) - \mathbf{k}(\Theta_2) = \Delta_{12} \mathbf{k}(\Psi_{orientation}) \quad (40)$$

Où $\Psi_{orientalion}$ est l'angle d'orientation entre les deux sources. Pour un réseau 2-D $\Psi_{orientation} = \{\alpha, 0\}$ où $\alpha$ est un angle d'orientation dans le plan azimutal et pour un réseau 3-D $\Psi_{orientation} = \{\alpha, \beta\}$ où $\beta$ est un angle d'orientation de type élévation dans la direction $\alpha$. La limite de résolution $\Delta_{12}^{lim}$ est la valeur minimale de $\Delta_{12}$ dans la direction $\Psi_{orientation}$ pour laquelle la condition (30) est vérifiée. L'expression de la limite de résolution est la suivante

$$\Delta_{12}^{lim} = \frac{\sqrt{2}}{\pi \dfrac{D_{pp}(\Psi_{orientation})}{\lambda}} \sqrt{\frac{x\sigma_{erreur}}{\sqrt{N\left(\rho(\Psi_{orientation})^2 - 1\right)}}} \quad (41)$$

Où les valeurs de $\sigma_{erreur}$ résumé dans le tableau suivant dépendent du type de performances considérées.

**Tableau 4 - Valeur du $\sigma_{erreur}$ du critère de résolution en fonction du type de performances**

| Type de Performances | | Valeur du coefficient $\alpha$ |
|---|---|---|
| **Performance de MUSIC** | *A temps d'intégration fini avec* $\mathbf{x}(t_k)$ *pour* $1 \leq k \leq K$ | $\sigma_{erreur}^2 = \dfrac{1}{K\left(1 - r_{12}^2\right)}\left( \dfrac{1}{2}\left( \dfrac{1}{\rho_1} + \dfrac{1}{\rho_2} \right) + \dfrac{r_{12}}{\sqrt{\rho_1 \rho_2}} \right)$ $\rho_m$ : Rapport signal sur bruit de la $m^{ième}$ source $r_{12}$ : Corrélation temporelle des sources |
| | *En présence d'erreur de modèle* | $\sigma_{erreur}^2 = \dfrac{E\left[\mathbf{e}_m^H \mathbf{e}_m\right]}{N}$ |

Les paramètres $\mathbf{D}_{pp}$ ($\Psi_{orientation}$) et $\rho$ ($\Psi_{orientation}$) sont liés de la manière suivante aux statistiques d'ordre 2 et 4 de la répartition des capteurs

$$D_{pp}\left(\Psi_{orientation}\right)=\frac{1}{N}\sum_{n=}^{N}d_{n}\left(\Psi_{orientation}\right)^{2}$$

$$\rho\left(\Psi_{orientation}\right)^{2}=\frac{\frac{1}{N}\sum_{n=}^{N}d_{n}\left(\Psi_{orientation}\right)^{4}}{D_{pp}\left(\Psi_{orientation}\right)^{2}}\quad(42)$$

$$d_{n}\left(\Psi\right)=\mathbf{k}_{d}\left(\Psi\right)^{H}\left(\mathbf{p}_{d,n}-\overline{\mathbf{p}}\right)$$

Les positions $d_n$ ($\Psi$) sont les positions des capteurs projetés sur un axe d'orientation $k_d$ ($\Psi_{orientation}$) . L'expression (32) permet de

- Définir une omnidirectionnalité en résolution pour un réseau $d$- D : Le coefficient $\rho$ ($\Psi_{orientation}$) est indépendant de la direction $\Psi$. Un réseau circulaire uniforme est omni- directionnel en résolution avec $\rho$ ($\Psi_{orientation}$)$^2$ =1.5.
- Définir un critère de pouvoir de résolution où 1/ ($\rho$ ($\Psi_{orientation}$) $^{2}$- 1) doit être proche de 0.

Dans la suite du paragraphe des critères plus précis sont établis sur l'omnidirectionalité en résolution et la capacité de résolution. Les expressions de $\mathbf{D}_{pp}$ ($\Psi_{orieatation}$) et $\rho$ ($\Psi_{orientation}$) de l'expression (33) peuvent s'écrire :

$$D_{pp}\left(\Psi_{orientation}\right)=\mathbf{k}_{d}\left(\Psi_{orientation}\right)^{H}\mathbf{D}_{pp}\mathbf{k}_{d}\left(\Psi_{orientation}\right)$$

$$\rho\left(\Psi_{orientation}\right)^{2}=\frac{\mathbf{k}_{d}\left(\Psi_{orientation}\right)^{\otimes 2H}\mathbf{Q}_{pp}\mathbf{k}_{d}\left(\Psi_{orientation}\right)^{\otimes 2}}{D_{pp}\left(\Psi_{orientation}\right)^{2}}\quad(43)$$

$$\mathbf{Q}_{pp}=\frac{1}{N}\sum_{n=1}^{N}\left(\mathbf{p}_{d,n}-\overline{\mathbf{p}}\right)^{\otimes 2}\left(\mathbf{p}_{d,n}-\overline{\mathbf{p}}\right)^{\otimes 2H}$$

Où $\mathbf{D}_{pp}$ est la matrice de covariance des positions définie par l'équation (11), $\otimes$ est le produit de Kronecker et $\mathbf{k}^{\otimes 2}$ =$\mathbf{k}\otimes\mathbf{k}$. Plus précisément le coefficient $\rho$ ($\Psi_{orientation}$)$^2$ est le rapport de forme quadratique suivant (44)

$$\rho\left(\Psi_{orientation}\right)^{2}=\frac{\tilde{\mathbf{k}}_{d}^{\otimes 2H}\tilde{\mathbf{Q}}_{pp}\tilde{\mathbf{k}}_{d}^{\otimes 2}}{\tilde{\mathbf{k}}_{d}^{\otimes 2H}\tilde{\mathbf{k}}_{d}^{\otimes 2}}\quad\text{avec}\quad\begin{cases}\tilde{\mathbf{Q}}_{pp}=\left(\mathbf{D}_{pp}^{-1/2}\otimes\mathbf{D}_{pp}^{-1/2}\right)^{H}\mathbf{Q}_{pp}\left(\mathbf{D}_{pp}^{-1/2}\otimes\mathbf{D}_{pp}^{-1/2}\right)\\\tilde{\mathbf{k}}_{d}=\mathbf{D}_{pp}^{1/2}\mathbf{k}_{d}\left(\Psi_{orientation}\right)\\\mathbf{D}_{pp}=\mathbf{D}_{pp}^{1/2}\left(\mathbf{D}_{pp}^{1/2}\right)^{H}\end{cases}$$

On peut alors définir des critères d'omnidirectionalité et de pouvoir de résolution à partir des valeurs propres suivantes de la matrice $\tilde{\mathbf{Q}}_{pp}$ de l'équation (35) .

$$\tilde{\mathbf{Q}}_{pp}=\sum_{i=1}^{d\times d}Q_{i}\mathbf{v}_{i}\left(\mathbf{v}_{i}\right)^{H}\quad(45)$$

Où $Q_i$ sont les valeurs propres associées aux vecteurs propres $v_i$. Le critère d'omnidirectionnalité en résolution est le suivant

$$R_{omni} = \frac{\max_{\Psi} \rho(\Psi)^2}{\min_{\Psi} \rho(\Psi)^2} = \frac{\max_i Q_i}{\min_i Q_i} \quad (46)$$

En conséquence le réseau est omnidirectionnel lorsque $R_{omni}$ est minimal, c'est à dire que $R_{omni}$=1. Sachant qu'un réseau aura un fort pouvoir de résolution lorsque $|\rho(\Psi_{orientation})^2 - 1|$ est grand, on définit alors le pouvoir de résolution par

$$R_{power} = \min_{\Psi} \left| \rho(\Psi)^2 - 1 \right| = \min_i \left| Q_i - 1 \right| \quad (46')$$

En conséquence les critères de résolution sont liés aux statistiques d'ordre 4 de la répartition des capteurs $Q_{pp}$. Dans un processus d'optimisation de réseau, l'objectif sera de minimiser le critère $R_{omni}$ et de maximiser $R_{power}$. Les calculs de ces deux critères à partir des positions $\mathbf{p}_{d,n}$ des capteurs d'un réseau sont résumés dans les étapes suivantes :

---

**Etape n°1 (Res) :** A partir des positions des capteurs $\mathbf{p}_{d,n}$ calcul de $\mathbf{D}_{pp}$ selon (11).

**Etape n°2 (Res) :** A partir des $\mathbf{p}_{d,n}$ calcul de $\mathbf{Q}_{pp}$ selon (34).

**Etape n°3 (Res) :** A partir de $\mathbf{D}_{pp}$ et $\mathbf{Q}_{pp}$ , calcul de $\tilde{\mathbf{Q}}_{pp}$ selon (35).

**Etape n°4 (Res) :** Décomposition en éléments propres de $\tilde{\mathbf{Q}}_{pp}$ soit:

$$\tilde{\mathbf{Q}}_{pp} = \sum_{i=1}^{d \times d} Q_i \mathbf{v}_i (\mathbf{v}_i)^H .$$

**Etape n°5 (Res) :** Calcul du critère d'omnidirectionalité en résolution $R_{omni}$ selon (37) à partir des $Q_i$.

**Etape n°6 (Res) :** Calcul du pouvoir de résolution $R_{power}$ selon (46') à partir des $Q_i$.

---

**Processus de calcul de critères permettant d'optimiser le pouvoir de résolution ainsi que l'omni-directionalité en résolution**

**Ambiguïté de réseau**

L'objectif est d'établir un contraste entre le niveau des lobes principaux et celui des lobes secondaires du critère MUSIC ou d'un autre critère équivalent. La goniométrie est ambiguë lorsque l'algorithme donne les incidences d'un des lobes secondaires à la place de l'un des lobes principaux. Les critères d'ambiguïtés se feront dans l'espace des composantes du vecteur d'onde.

**Ambiguïtés d'ordre 1**

En présence d'une source d'incidence $\Theta_1$, un réseau est mathématiquement ambigu à l'ordre 1 lorsqu'il existe une incidence $\Theta$ pour laquelle les vecteurs $\mathbf{a}(\mathbf{k}_d(\Theta_1))$ et $\mathbf{a}(\mathbf{k}_d(\Theta))$ soient colinéaires. Dans ces conditions la projection du vecteur directeur $\mathbf{a}(\Theta)$ sur le vecteur $\mathbf{a}(\Theta_1)$ est maximale

$$Diag_\lambda \left( \mathbf{a}_\lambda (\mathbf{k}_d(\Theta_1)), \mathbf{k}_d(\Theta) \right) = 1 = \frac{\mathbf{a}_\lambda (\mathbf{k}_d(\Theta))^H \Pi(\mathbf{a}_\lambda (\mathbf{k}_d(\Theta_1))) \mathbf{a}_\lambda (\mathbf{k}_d(\Theta))}{N} \quad (47)$$

où 1- $Diag_\lambda$ $(\mathbf{a}(\mathbf{k}_1), \mathbf{k}_2)$ est une distance entre les vecteurs $\mathbf{a}(\mathbf{k}_1)$ et $\mathbf{a}(\mathbf{k}_2))$ où $\Pi(\mathbf{A})$ est le projecteur sur l'espace engendré par les colonnes de A tel que

$$\Pi(\mathbf{A}) = \mathbf{A} \left( \mathbf{A}^H \mathbf{A} \right)^{-1} \mathbf{A}^H \quad (48)$$

et où a$_\lambda$ (*u, v*) est le vecteur directeur pour la longueur d'onde $\lambda$ tel que

$$\mathbf{a}_\lambda\left(\mathbf{k}_d\right) = \begin{bmatrix} a_{1\lambda}\left(\mathbf{k}_d\right) \\ \vdots \\ a_{N\lambda}\left(\mathbf{k}_d\right) \end{bmatrix} \text{ avec } a_{n\lambda}\left(\mathbf{k}_d\right) = \exp\left( j\frac{2\pi}{\lambda}\mathbf{k}_d^{\ T}\mathbf{p}_{d,n}\right) \tag{49}$$

Comme $Diag_\lambda$ (**A, k**$_d$ ($\Theta$) ) est compris entre 0 et 1 et qu'il existe une ambiguïté mathématique lorsque $Diag_\lambda$ (**A, k**$_d$ ($\Theta$) ) =1 (La distance entre **a** (**k**$_d$ ($\Theta$) ) et A est nulle), le critère de robustesse aux ambiguïtés d'ordre 1 noté $\eta_1$ ($\lambda$) dépendant de la longueur d'onde $\lambda$ de la manière suivante :

$$\eta_1\left(\lambda\right) = \min_{\Theta_1} \eta_1\left(\lambda, \Theta_1\right)$$
$$\eta_1\left(\lambda, \Theta_1\right) = \min_{\substack{\mathbf{k}_d \\ \mathbf{k}_d{}^H\mathbf{k}_d \leq 1}} \left(1 - Diag_\lambda\left(\mathbf{a}_\lambda\left(\mathbf{k}_d\left(\Theta_1\right)\right), \mathbf{k}_d\right)\right) \tag{50}$$

Car $\mathbf{k}_d$ ($\Theta$) $^H\mathbf{k}_d$ ($\Theta$) $\leq 1$. D'un point de vue pratique, on considère que les ambiguïtés d'ordre 1 sont faibles lorsque $\eta_1$ ($\lambda$) <0.1.

**Méthode classique pour obtenir $\eta_1(\lambda)$ selon l'art antérieur**

La méthode classique selon l'art antérieur pour obtenir la robustesse aux ambiguïtés consiste à tirer aléatoirement des incidences $\Theta_1^k$ et à calculer le critère suivant

$$\eta_1\left(\lambda\right)^k = \eta_1\left(\lambda, \Theta_1^{\ k}\right) \text{ pour } 1 \leq k \leq nb \tag{51}$$

Où nb est le nombre de réalisations permettant d'établir la fonction de répartition de $\eta_1(\lambda)^k$. La robustesse aux ambiguïtés d'ordre 1 $\eta_1(\lambda)$ pour la longueur d'onde $\lambda$ doit alors vérifier

$$\Pr\left(\eta_1\left(\lambda\right)^k < \eta_1\left(\lambda\right)\right) = p_{fa} \text{ pour } 1 \leq k \leq nb \tag{52}$$

Où Pr(.) est une probabilité et où $p_{fa}$ vaut typiquement 5%.

**Méthode optimisée pour obtenir $\eta_1(\lambda)$ selon l'invention**

Comme l'optimisation de réseau consiste à chercher le meilleur réseau dans une bande de fréquence large, on souhaite obtenir en un coup toutes les valeurs de $\eta_1(c/f)$ pour $f_{min} \leq f \leq f_{max}$ où $f_{min}$ et $f_{max}$ sont les fréquences minimales et maximales d'utilisation d'un réseau. L'optimisation qui va être décrite plus loin est basée sur le fait que

$$Diag_\lambda\left(\mathbf{a}_\lambda\left(\mathbf{k}_d\left(\Theta_1\right)\right), \mathbf{k}_d\right) = \frac{\left|\sum_{n=1}^{N}\exp\left( j\frac{2\pi}{\lambda}\left(\mathbf{k}_d\left(\Theta_1\right) - \mathbf{k}_d\right)^T\mathbf{p}_{d,n}\right)\right|^2}{N^2} \tag{53}$$

On en déduit tout d'abord la *propriété n°1* suivante

$$Diag_\lambda\left(\mathbf{a}_\lambda\left(\mathbf{k}_d\left(\Theta_1\right)\right),\mathbf{k}_d\right)=Diag_\lambda\left(\mathbf{a}_\lambda\left(\mathbf{0}_d\right),\Delta\mathbf{k}\right)$$
$$\Delta\mathbf{k}=\mathbf{k}_d-\mathbf{k}_d\left(\Theta_1\right)$$

(54)

Où $0_d = [0 \cdots 0]^T$. Sachant que $k_d(\Theta_l)^H k_d(\Theta_l) \leq 1$ et que $\mathbf{k}_d{}^H\mathbf{k}_d \leq 1$, on en déduit que

$$\Delta\mathbf{k}^H\Delta\mathbf{k}\leq 2$$

(55)

Ou bien $\Delta\mathbf{k}^H\Delta\mathbf{k}$ la distance au carré entre $\mathbf{k}_d$ et $\mathbf{k}_d(\Theta_l)$ est bornée par 2) (56)

En conséquence on obtient $\eta_l(\lambda)$ en effectuant

$$\eta_1\left(\lambda\right)=\min_{\substack{\Delta\mathbf{k}\\\Delta\mathbf{k}^H\Delta\mathbf{k}\leq 2}}\left(1-Diag_\lambda\left(\mathbf{a}_\lambda\left(\mathbf{0}_d\right),\Delta\mathbf{k}\right)\right)$$

(57)

De l'équation (53) on en déduit la **propriété n°2** suivante

$$Diag_{\lambda\alpha}\left(\mathbf{a}_{\lambda\alpha}\left(\mathbf{k}_d\left(\Theta_1\right)\right),\mathbf{k}_d\right)=Diag_\lambda\left(\mathbf{a}_\lambda\left(\frac{\mathbf{k}_d\left(\Theta_1\right)}{\alpha}\right),\frac{\mathbf{k}_d}{\alpha}\right)$$

(58)

On en déduit que

$$\eta_1\left(\lambda=\frac{c}{f}\right)=\min_{\substack{\Delta\mathbf{k}\\\Delta\mathbf{k}^H\Delta\mathbf{k}\leq 2\frac{f}{f_{max}}}}\left(1-Diag_{\lambda_{max}}\left(\mathbf{a}_{\lambda_{max}}\left(\mathbf{0}_d\right),\Delta\mathbf{k}\right)\right)$$

(59)

Où $\lambda_{max} = c/f_{max}$ sachant que $f \leq f_{max}$. En conséquence, le critère de robustesse aux ambiguïtés d'ordre 1 dans une gamme de fréquence où $f \leq f_{max}$ est tel que

$$\eta_1{}^{ambig}=\eta_1\left(\lambda_{max}\right)=\min_{\substack{\Delta\mathbf{k}\\\Delta\mathbf{k}^H\Delta\mathbf{k}\leq 2}}\left(1-Diag_{\lambda_{max}}\left(\mathbf{a}_{\lambda_{max}}\left(\mathbf{0}_d\right),\Delta\mathbf{k}\right)\right)$$

(60)

Car $\eta_l(\lambda_{max}) \leq \eta_l(\lambda)$ lorsque $fmax \geq f$.

**Ambiguïtés d'ordre $P>1$**

Un réseau est mathématiquement ambigu à l'ordre P lorsque le vecteur directeur $\mathbf{a}(\mathbf{k}_d(\Theta))$ est engendré par une base de vecteurs directeurs $\mathbf{a}(\mathbf{k}_d(\Theta_1))$ jusqu'à $\mathbf{a}(\mathbf{k}_d(\Theta_P))$. En conséquence la projection suivante du vecteur directeur $\mathbf{a}(\mathbf{k}_d(\Theta))$ sur l'espace engendré par les vecteurs $\mathbf{a}(\mathbf{k}_d(\Theta_p))$ pour $1 \leq p \leq P$ (P vecteurs indicés p) est nulle :

$$Diag_\lambda\left(\mathbf{A}_\lambda\left(\Phi^P\right),\mathbf{k}_d\left(\Theta\right)\right)=1=\frac{\mathbf{a}_\lambda\left(\mathbf{k}_d\left(\Theta\right)\right)^H\Pi\left(\mathbf{A}_\lambda\left(\Phi^P\right)\right)\mathbf{a}_\lambda\left(\mathbf{k}_d\left(\Theta\right)\right)}{N}$$

(61)

où le projecteur $\Pi(\mathbf{A})$ est défini par l'équation (48) et où

$$\mathbf{A}_\lambda\left(\Phi^P\right)=\left[\mathbf{a}_\lambda\left(\mathbf{k}_d\left(\Theta_1\right)\right)\quad\cdots\quad\mathbf{a}_\lambda\left(\mathbf{k}_d\left(\Theta_P\right)\right)\right]\ \text{et}\ \Phi^P=\left\{\mathbf{k}_d\left(\Theta_1\right)\quad\cdots\quad\mathbf{k}_d\left(\Theta_P\right)\right\}$$

(62)

Comme $Diag_\lambda$ (**A**, **k**$_d$ ($\Theta$) ) est compris entre 0 et 1 et qu'il existe une ambiguïté mathématique lorsque $Diag_\lambda$ (**A**, **k** ($\Theta$) ) =1, on définit la robustesse aux ambiguïtés d'ordre $P$ pour la longueur d'onde $\lambda$, le paramètre $\eta_P$ ($\lambda$) suivant :

$$\eta_P\left(\lambda\right) = \min_{\Phi^P} \eta_P\left(\lambda, \Phi^P\right)$$

$$\eta_P\left(\lambda, \Phi^P\right) = \min_{\substack{\mathbf{k}_d \\ \mathbf{k}_d{}^H\mathbf{k}_d < 1}} \left(1 - Diag_\lambda\left(\mathbf{A}_\lambda\left(\Phi^P\right), \mathbf{k}_d\right)\right) \tag{63}$$

D'un point de vue pratique, on considère que l'on n'a pas d'ambiguïté d'ordre P lorsque $\eta_P$ ($\lambda$, $\Phi^P$) <0.1. D'un point de vue statistique on remarque souvent que

$$\eta_P\left(\lambda\right) = \frac{\eta_1\left(\lambda\right)}{P} \tag{64}$$

L'estimation optimisée de $P$=1 de $\eta_P$ ($\lambda$) pour toutes les incidences n'est pas applicable pour $P$>1. C'est ainsi que la méthode classique ci-après est appliquée à la fréquence maximale.

Cette méthode consiste à tirer aléatoirement $P$ couples d'incidences $\Phi^{Pk}$ ={**k**$_d$($\Theta_1{}^k$) $\cdots$ **k**$_d$ ($\Theta_P{}^k$)} pour ensuite calculer

$$\eta_P\left(\lambda\right)^k = \eta_P\left(\lambda, \Phi^{Pk}\right) \text{ pour } 1 \leq k \leq nb \tag{65}$$

où nb est le nombre de réalisations permettant d'estimer la fonction de répartition de $\eta_P(\lambda)^k$. La robustesse aux ambiguïtés d'ordre $P$ $\eta_P(\lambda)^k$ pour la longueur d'onde $\lambda$ doit alors vérifier

$$\Pr\left(\eta_P\left(\lambda\right)^k < \eta_P\left(\lambda\right)\right) = p_{fa} \text{ pour } 1 \leq k \leq nb \tag{66}$$

où Pr(.) est une probabilité et où $p_{fa}$ vaut typiquement 5%.

## Conclusion

Dans le processus d'optimisation de réseau, on estimera les critères d'ambiguïté $\eta_P(\lambda)$ pour chaque réseau où les positions des capteurs sont paramétrés par **p**$_n$. Lorsque $P$=1 on dispose d'un seul critère (60) qui permet d'obtenir la robustesse aux ambiguïtés $\eta_1{}^{ambig}$ dans une gamme de fréquence de fréquence maximale $f_{max}$ et indépendamment de la direction des sources.

### *Optimisation de réseau*

Le (ou les) processus d'optimisation sont initialisés par des familles de réseaux dont on fait varier les paramètres. Ces réseaux peuvent être

- Des réseaux aléatoires $d$-D (linéaire, plan ou 3-D dans l'espace). La répartition des capteurs suit une loi qui peut être gaussienne, uniforme ou etc...
- Des réseaux 2-D composés de deux sous réseaux 1-D ayant un écart d'orientation de $\delta$. Il s'agit en particulier des réseaux en V figure 5. Ces réseaux ne sont pas tous omnidirectionnels. Le caractère plus ou moins omni-directionnel dépend de la position relative des deux branches linéaires du V ainsi que de l'angle $\delta$ entre les branches.
- Des réseaux 2-D composé de plusieurs cercles concentriques figure 4. Les paramètres sont par exemple les rayons, le nombre de capteurs et l'orientation de chaque cercle. Ces réseaux ont la caractéristique d'être omni-directionnels en précision. Dans cette famille de réseaux on a les réseaux circulaires uniformes figure 3.
- Les réseaux linéaires 1-d peuvent être

- Des ULA où les capteurs sont équi-espacés ($p_{1,n} = d(n-1)$)
- Homothétiques avec $p_{1,n} = d \times \rho^{n-1}$ où $p$ est le rapport homothétique
- Aléatoire

Un cahier des charges peut aussi donner des contraintes d'encombrement comme :

- L'ouverture physique $D_{ph}$ : Diamètre du plus petit cercle (réseau 2-D voir ou plus petite sphère (réseau 3-D) qui englobe tous les capteurs du réseau. Pour un réseau 1-D il s'agit de la distance entre les deux capteurs les plus éloignés. Nous donnons ci-dessous le processus permettant de calculer l'ouverture physique d'un réseau d-D sachant que l'on peut définir un cercle à partir de 3 points et qu'une sphère se construit avec 4 points.

---

**Etape n°1 (DPH) :** Initialisation : $D_{ph}=0$
Pour tous les $d$-uplets $\mathbf{p}_{d,n_i}$ où $(1 \leq i \leq d+1)$ sachant que $(1 \leq n_i \leq N)$

**Etape n°2 (DPH) :** Calcul de

- La distance $D$ entre les deux capteurs lorsque $d=1$
- Du diamètre $D$ du cercle passant par les trois capteurs lorsque $d=2$
- Du diamètre $D$ de la sphère passant par les 4 capteurs lorsque $d=2$

**Etape n°3 (DPH) :** Calcul du centre $\bar{\mathbf{p}}_0$ du cercle ou de la sphère lorsque d>1. Pour d=1 calcul de la position moyenne des deux capteurs

**Etape n°3 (DPH) :** Si $(\mathbf{p}_{d,n}-\mathbf{p}_0)^H (\mathbf{p}_{d,n}-\mathbf{p}_0) \leq D/2$ pour $(1 \leq n \leq N)$ alors $D_{ph}=D$

**Etape n°4 (DPH) :** Passage aux $d$-uplets suivants et retour à l'étape n°2

---

**Processus de calcul d'une ouverture physique d'un réseau d-D**

- Distance minimal entre capteurs qui peut être du soit à l'encombrement du capteur élémentaire soit à un souhait de minimiser un inter-couplage.
- Zone 1-d, 2-d ou 3-d dans laquelle les capteurs peuvent être installés. L'optimisation de réseau peut alors prendre en compte le critère de précision pour obtenir des réseaux ayant l'encombrement nécessaire.

Le processus suivant permet de trouver les $nb$ meilleurs réseaux $d$-D omni-directionnel (ou directionnel) permettant de goniométrer $P$ sources à partir

- d'un critère de précision ($\sigma_{\theta_{\min}}$ et $\sigma_{\theta_{\max}}$ de la précision en azimut à l'élévation $\Delta_m$ ainsi qu'une précision $\sigma_\Delta$ en $\Delta_m = 0$. lorsque le réseau est 3D)
- d'une famille de réseau qui peut être aléatoire ou paramétrée

Lorsque les réseaux sont aléatoires, on réalise une boucle sur les différentes réalisations aléatoires et lorsque le réseau est paramétré on boucle sur les paramètres du réseau (par exemple l'angle $\delta$ pour le réseau en V figure 5. Ainsi **Etape n°A. 0 :** Initialisation de l'ensemble $\Psi = \varnothing$ , $i=0$
Boucle sur un ensemble de / vecteurs de paramètres d'une famille de réseaux
**Etape n°A. 1 :** Tirage d'un réseau $i$- ième initial $d$- D ($\mathbf{p}_{d,n}^{\text{ini}}$ pour $(1 \leq n \leq N)$ ) suivant le jeu de paramètres de la famille de réseaux choisis.
**Etape n°A. 2 :** Transformation suivant l'un des sous- procédés du réseau initial en un réseau où les performances en azimut varient entre $\sigma_{\theta_{\min}}$ et $\sigma_{\theta_{\max}}$ pour une élévation $\Delta_m$ et dans le cas d'un réseau 3- D utilisation de la précision en élévation $\sigma_\Delta$ en $\Delta_m = 0$. On obtient alors un nouveau réseau $\mathbf{p}_{d,n}$ pour $(1 \leq n \leq N)$ .
**Etape n°A. 3 (Option) :** Si le réseau ne vérifie pas certaines contraintes d'encombrement comme la distance minimale entre 2 capteurs alors retour à l'étape n°1 pour le tirage d'un autre réseau avec $i=i+1$.
**Etape n°A. 4 :** Calcul des paramètres de résolution $R_{omni}$ (facteur d'omnidirectionalité en résolution) et $R_{power}$ (Pouvoir de résolution) .
**Etape n°A. 5 (Option) :** Si $R_{omni} > R_{omni}^{\max}$ alors retour à l'étape n°1 pour le tirage d'un autre réseau avec $i=i+1$.
**Etape n°A. 6 (Option) :** Si $R_{power} < R_{power}^{\min}$ alors retour à l'étape n°1 pour le tirage d'un autre réseau avec $i=i+1$.
**Etape n°A. 7 :** Calcul du critère $\eta_1^{ambig}$ de la robustesse aux ambiguïtés d'ordre 1 de l'équation (59) à partir de la

connaissance de $f_{\max}$.

**Etape n°A. 8 :** Stockage du réseau $\Psi = \{\Psi \,(\eta_1{}^{ambig},\, \mathbf{p}_{d,n}\text{ pour }(1 \leq n \leq N)\,)\}$

**Etape n° A. 9 :** Classement des éléments de $\Psi$ suivant le niveau des ambiguïtés d'ordre 1 tel qu'au final $\Psi = \{(\eta_1{}^{ambig(k)}, \mathbf{p}_{d,n}{}^{(k)})\text{ pour }(1 \leq k \leq K)\text{ avec }\eta_1{}^{ambig(1)} \geq ... \geq \eta_1{}^{ambig(K)}\}$ : Classement du réseau le plus robuste aux ambiguïtés d'ordre 1 au réseau le moins robuste.

**Etape n°A. 1 0 :** $i = i+1$ Si $i < I$ alors retour à l'étape n°1.

**Etape n°A. 11 :** Stockage des nb meilleurs réseaux vis à vis des ambiguïtés d'ordre 1 tel que $\Psi_{opt} \subset \Psi$ avec $\Psi_{opt} = \{(\eta_1{}^{ambig(k)}, \mathbf{p}_{d,n}{}^{(k)})\text{ pour }(1 \leq k \leq nb)\}$

**Etape n°A. 12 :** Calcul des ambiguïtés d'ordre P des réseaux de $\Psi_{opt}$ selon (66) pour obtenir $\Psi_{opt} = \{(\eta_1{}^{ambig(k)}, \eta_P\,(c/f_{\max})^{(k)}, \mathbf{p}_{d,n}{}^{(k)})\text{ pour }(1 \leq k \leq nb)\}$.

**Etape n° A. 13:** Classement des éléments de $\Psi_{opt}$ suivant le niveau des ambiguïtés d'ordre $P$ tel qu'en final $\Psi_{opt} = \{(\eta_1{}^{ambig(k)}, \eta_P{}^{(k)}\,(c/f_{\max}), \mathbf{p}_{d,n}{}^{(k)})\text{ pour }(1 \leq k \leq nb)\text{ avec }\eta_P{}^{(1)} \geq \cdots \geq \eta_P{}^{(nb)}\}$ : Classement du réseau le plus robuste aux ambiguïtés d'ordre P au réseau le moins robuste.

Dans le cas des réseaux en V comprenant deux branches sur lesquelles sont répartis les capteurs, on peut réaliser un boucle sur l'angle $\delta$ entre les deux branches du V. Pour les doubles cercles on peut boucler sur le rapport des rayons R1/R2 ainsi que l'écart angulaire $\alpha1-\alpha2$. Pour les réseaux aléatoire il s'agit juste d'un ensemble de tirage aléatoire de réseaux.

En final des étapes d'optimisation on obtient les nb meilleurs réseaux vis-à-vis des ambiguïtés d'ordre P qui vérifient les performances $\sigma_{\theta_{\min}}$ et $\sigma_{\theta_{\max}}$ et $\sigma_\Delta$ pour les réseaux 3D.

Le procédé selon l'invention permet par rapport à l'art antérieur de résoudre les problèmes suivants :

- la généralisation du calcul des performances en mono-source à une seule expression,
- le calcul de performances mono-source pour des réseaux 2-D, 1-D et 3-D quelconques en fonction de la géométrie du réseau,
- l'établissement d'un critère reliant la résolution de deux sources et la géométrie des capteurs,
- l'établissement d'un critère de directivité pour des réseaux $d$-D quelconques,
- l'optimisation de réseau de capteurs quelconques à nombre de capteurs fixés à partir d'un cahier des charges donnant la précision mono-source, la résolution sous les contraintes d'encombrement maximal, d'omnidirectionalité ou de zones dans lesquelles les antennes sont installables.

## Revendications

**1.** Procédé pour déterminer la position optimale de capteurs identiques au sein d'un réseau de communications ayant une dimension variant de d=1 à 3 où d est la dimension du réseau de capteurs destiné à effectuer des mesures de goniométrie, lesdites mesures de goniométrie minimisant les ambiguïtés du réseau, en tenant compte de paramètres d'un cahier des charges comprenant des performances mono-source du réseau traduites par des ellipses d'incertitude ou un intervalle pour le cas des réseaux à une dimension, l'encombrement résultant de la taille d'un réseau de capteurs, le pouvoir de résolution en présence de deux sources, **caractérisé en ce qu'**il comporte au moins les étapes suivantes :

initialiser à 0 un indice i de réseau et à 1 le nombre de réseau disponible,
prendre de manière aléatoire un réseau ayant une structure de N capteurs disposés dans des positions initiales $\mathbf{p}_{d,n}$ ($1 \leq n \leq N$),

déterminer la matrice $D_{pp}^{directif}$ obéissant à l'ellipse d'incertitude donnée dans le cahier des charges ou l'intervalle pour les réseaux à une dimension, les axes de l'ellipse d'incertitude dans l'espace des angles d'azimuth et d'élévation étant définis par les écarts types $\sigma_{\theta_{\min}=\theta_{directif}} = \min_\theta \sigma_\theta$ et $\sigma_{\theta_{\max}=\theta_{directif}-\frac{\pi}{2}} = \max_\theta \sigma_\theta$ minimal et maximal en azimut sachant que $\sigma_\theta = \sqrt{E\left[\left(\theta_m - \hat{\theta}_m\right)^2\right]}$) et par l'écart type en élévation $\sigma_\Delta = \sqrt{E\left[\left(\Delta_m - \hat{\Delta}_m\right)^2\right]}$, ladite détermination comprenant les étapes suivantes :
calculer la matrice de corrélation $\mathbf{D}_{pp}$ des positions $\mathbf{p}_{d,n}$ des capteurs d'un réseau d-D initial

$$\mathbf{D}_{pp} = \frac{1}{N}\sum_{n=1}^{N}\left(\mathbf{p}_{d,n} - \overline{\mathbf{p}}\right)\left(\mathbf{p}_{d,n} - \overline{\mathbf{p}}\right)^{T} \text{ avec } \overline{\mathbf{p}} = \frac{1}{N}\sum_{n=1}^{N}\mathbf{p}_{d,n}$$

Où d est la dimension du réseau de capteurs et n l'indice du capteur,

déterminer les valeurs $\sigma_{d,1} = \sigma_{\theta min}|\cos(\Delta_m)|1$ et $\sigma_{d,d} = \sigma_{\theta max}|\cos(\Delta_m)|$ ($\sigma_{3,2} = \sigma_\Delta$ pour les réseaux 3-D avec d=3) des axes de l'ellipse d'incertitude dans l'espace du vecteur d'onde à partir de $\sigma_{\theta min}$ et $\sigma_{\theta max}$ qui sont les axes de l'ellipse d'incertitude dans l'espace de l'azimut et de l'élévation ou correspondant à l'intervalle dans le cas à une dimension, avec d = 1, 2 ou 3 ,

Où $\sigma_{\theta min}$ et $\sigma_{\theta max}$ sont les valeurs minimale et maximale de la précision en azimut à l'élévation $\Delta_m$ ainsi qu'une précision $\sigma_\Delta$ en $\Delta_m$ = 0.,

calculer la taille de chaque réseau $D_i$ en tenant compte des axes des ellipses d'incertitude $\sigma_{d,i}$ dans l'espace du vecteur d'onde qui dépendent des axes de l'ellipse dans l'espace de l'azimut et de l'élévation qui sont données dans le cahier des charges : $D_i = \left(\left(\sqrt{\alpha/8N}\right)/\sigma_{d,i}\right)$ pour 1≤i≤d,

avec N le nombre de capteurs, $\alpha$ un paramètre dépendant du type de performance comme indiqué dans Tableau-1, $\lambda$ la longueur d'onde

déterminer la matrice de corrélation $\mathbf{D}_{pp}^{directif}$ en utilisant

$$\mathbf{D}_{pp}^{\text{directif}} = \sum_{i=1}^{d}\left(D_i\right)^{2}\mathbf{h}_i\mathbf{h}_i^{H}$$

Où $(D_i)^2$ et $\mathbf{h}_i$ sont respectivement les valeurs propres et vecteurs propres de $D_{pp}^{directif}$ et les $\mathbf{h}_i$ dépendent de $\theta_{directif}$

Déterminer la position $\mathbf{p}_{d,n}$ de chaque capteur n du réseau directif, en effectuant $\mathbf{p}_{d,n}^{directif} = (\mathbf{D}_{pp}^{directif})^{1/2}(\mathbf{p}_{d,n} - \overline{\mathbf{p}})$ tester si les valeurs des positions des capteurs vérifient les conditions techniques données dans le cahier des charges et si non, faire varier la valeur de i en i+1, i=i+1 et si i<l alors retourner à l'étape de tirage d'un réseau initial.

2. Procédé selon la revendication 1 **caractérisé en ce que** pour un réseau de dimension 2 dans lequel l'ellipse d'incertitude est **caractérisée par** son grand axe et son petit axe, ledit procédé comportant les étapes suivantes :

déterminer les valeurs de $\sigma_{d,1} = \sigma_{\theta min}|\cos(\Delta_m)|$ et $\sigma_{d,2} = \sigma_{\theta max}|\cos(\Delta_m)|$

$$\sigma_{\theta min} \leq \sigma_\theta \leq \sigma_{\theta max} \text{ avec } \begin{cases} \sigma_{\theta_{min}} = \dfrac{\sigma_{d,1}}{|\cos(\Delta_m)|} \\[2mm] \sigma_{\theta_{max}} = \dfrac{\sigma_{d,2}}{|\cos(\Delta_m)|} \end{cases}, \text{ déterminer les tailles}$$

$$D_i = \left(\left(\sqrt{\alpha/8N}\right)/\sigma_{d,i}\right)\lambda \text{ du réseau pour 1≤i≤2 et déterminer la matrice de corrélation } \mathbf{D}_{pp}^{directif}$$

$$\mathbf{D}_{pp}^{\text{directif}} = \left(D_1\right)^{2}\mathbf{k}_2\left(\theta_m + \frac{\pi}{2}, 0\right)\mathbf{k}_2\left(\theta_m + \frac{\pi}{2}, 0\right)^{H} + \left(D_2\right)^{2}\mathbf{k}_2\left(\theta_m, 0\right)\mathbf{k}_2\left(\theta_m, 0\right)^{H} \qquad .$$

à partir de $\theta_{directif} = \theta_m - \dfrac{\pi}{2}$, déterminer les positions des capteurs du réseau directif

$$\mathbf{p}_{2,n}{}^{directif} = \left(\mathbf{D}_{pp}{}^{directif}\right)^{1/2} \mathbf{D}_{pp}{}^{-1/2}\left(\mathbf{p}_{2,n} - \overline{\mathbf{p}}\right)$$

3. Procédé selon la revendication 1 **caractérisé en ce que** pour un réseau de capteurs à 3 dimensions, l'ellipse d'incertitude correspond à un ellipsoïde qui contient 3 axes et deux angles et ledit procédé comporte au moins les étapes suivantes :

déterminer les valeurs de $\sigma_{d,1} = \sigma_{\theta min}|\cos(\Delta_m)|$, $\sigma_{d,2} = \sigma_\Delta$ et $\sigma_{d,3} = \sigma_{\theta max}|\cos(\Delta_m)|$ $\sigma_{\theta min} \leq \sigma_\theta \leq \sigma_{\theta max}$ avec

$$\begin{cases} \sigma_{\theta_{\min}} = \dfrac{\sigma_{d,1}}{\left|\cos(\Delta_m)\right|} \\[2em] \sigma_{\theta_{\max}} = \dfrac{\sigma_{d,3}}{\left|\cos(\Delta_m)\right|} \end{cases}$$

où $\sigma_\Delta$ est l'écart type en azimut donné dans le cahier des charges à $\Delta = \Delta_m$, à partir du cahier des charges donnant l'azimut directif $\theta_{directif} = \theta_m + \dfrac{\pi}{2}$ pour lequel la précision en azimut $\sigma_{\theta min}$ est minimal déterminer les tailles $D_i = \left(\left(\sqrt{\alpha/8N}\right)/\sigma_{d,i}\right)\lambda$ du réseau pour $1 \leq i \leq 3$ déterminer la valeur de la matrice

$$\mathbf{D}_{pp}{}^{directif} = \left(D_1\right)^2 \mathbf{k}\left(\theta_m + \frac{\pi}{2}, 0\right)\mathbf{k}\left(\theta_m + \frac{\pi}{2}, 0\right)^H + \left(D_2\right)^2 \mathbf{k}\left(\theta_m, \frac{\pi}{2}\right)\mathbf{k}\left(\theta_m, \frac{\pi}{2}\right)^H$$
$$+ \left(D_3\right)^2 \mathbf{k}\left(\theta_m, 0\right)\mathbf{k}\left(\theta_m, 0\right)^H$$

et à partir de ladite matrice déterminer la position des capteurs du réseau directif

$$\mathbf{p}_{3,n}{}^{directif} = \left(\mathbf{D}_{pp}{}^{directif}\right)^{1/2} \mathbf{D}_{pp}{}^{-1/2}\left(\mathbf{p}_{3,n} - \overline{\mathbf{p}}\right)$$

4. Procédé selon la revendication 1 **caractérisé en ce que** le réseau est un réseau de capteurs linéaire à une dimension, l'ellipse d'incertitude étant dans ce cas **caractérisée par** l'écart type et le biais de la précision d'estimation de la composante du vecteur d'onde se projetant sur une ligne et en ce qu'il comporte au moins les étapes suivantes, dans le cas où l'azimuth est fixé :

Calcul de $\sigma_{d,1} = \sigma_\Delta|\sin(\Delta_m)\cos(\theta_0)|$ en utilisant les données du tableau

| Dimension du réseau | | $\sigma_\theta$ | $\sigma_\Delta$ |
|---|---|---|---|
| **1-D ou linéaire** | $\Theta_{m\|\Delta_0} = \{\theta_m\}$ | $\sigma_\theta = \dfrac{\sigma_1}{\left\|\cos(\Delta_0)\sin(\theta_m)\right\|}$ | Pas défini |
| | $\Theta_{m\|\theta_0} = \{\Delta_m\}$ | Pas défini | $\sigma_\Delta = \dfrac{\sigma_1}{\left\|\sin(\Delta_m)\cos(\theta_0)\right\|}$ |

Calcul des tailles de réseau $D_1$ en effectuant $D_1 = \left(\left(\sqrt{\alpha/8N}\right)/\sigma_{d,1}\right)\lambda$

Calcul de la matrice de corrélation

$$D_{pp}{}^{directif} = (D_1)^2$$

Calcul de la position des capteurs du réseau directif en effectuant

$$\mathbf{p}_{1,n}{}^{directif} = \sqrt{\dfrac{D_{pp}{}^{directif}}{D_{pp}}}\left(\mathbf{p}_{1,n} - \overline{\mathbf{p}}\right)$$

5. Procédé selon la revendication 1 **caractérisé en ce qu'**il comporte une étape au cours de laquelle, on détermine des critères d'omnidirectionnalité et de pouvoir de résolution à partir de la position $\mathbf{p}_{d,n}$ des capteurs d'un réseau qu'il soit le réseau tiré initialement ou encore le réseau directif défini en tenant compte de la matrice de covariance Dpp des positions des capteurs et de

$$Q_{pp} = \frac{1}{N}\sum_{n=1}^{N}\left(p_{d,n} - \overline{p}\right)^{\otimes 2}\left(p_{d,n} - \overline{p}\right)^{\otimes 2H}$$

à partir de $\boldsymbol{Q}_{pp}$ et de $\mathbf{D}_{PP}$ déterminer la valeur de $\tilde{\mathbf{Q}}_{pp}$

décomposer en éléments propres la matrice $\tilde{\mathbf{Q}}_{pp}$ ce qui conduit à $\tilde{\mathbf{Q}}_{pp} = \sum_{i=1}^{d \times d} Q_i \mathbf{v}_i \left(\mathbf{v}_i\right)^H$

déterminer le critère d'omnidirectionalité en résolution $R_{omni} = \dfrac{\max\limits_{i} Q_i}{\min\limits_{i} Q_i}$

déterminer le pouvoir de résolution $R_{power} = \min\limits_{i}\left|Q_i - 1\right|$

comparer ces deux valeurs à des valeurs données dans le cahier des charges et si les valeurs déterminées ne satisfont pas le critère du cahier des charges, choisir un nouveau réseau et réitérer les différentes étapes de calcul de position des capteurs et des critères d'omnidirectionalité et de pouvoir de résolution, pour des réseaux de dimension 1, 2 ou 3.

6. Procédé selon la revendication 1 **caractérisé en ce qu'**il comporte une étape au cours de laquelle on classe les réseaux en fonction d'un degré d'ambiguité en exécutant les étapes suivantes :

Initialiser un ensemble $\Psi$ contenant des réseaux et leurs caractéristiques,
déterminer, pour un réseau, le critère $\eta_1^{ambig}$ de la robustesse aux ambiguïtés d'ordre 1 à partir de la connaissance de la fréquence $f_{max}$

$$\eta_1\left(\lambda = \frac{c}{f}\right) = \min_{\Delta \mathbf{k}^H \Delta \mathbf{k} \le 2\frac{f}{f_{max}}} \left(1 - Diag_{\lambda_{max}}\left(\mathbf{a}_{\lambda_{max}}\left(\mathbf{0}_d\right), \Delta \mathbf{k}\right)\right)$$

Où $\lambda_{max} = c/f_{max}$ sachant que $f \le f_{max}$.
avec $\Delta \mathbf{k}$ correspondant à une distance

$$Diag_\lambda\left(\mathbf{a}_\lambda\left(\mathbf{k}_d\left(\Theta_1\right)\right), \mathbf{k}_d\right) = Diag_\lambda\left(\mathbf{a}_\lambda\left(\mathbf{0}_d\right), \Delta \mathbf{k}\right)$$

$$\Delta \mathbf{k} = \mathbf{k}_d - \mathbf{k}_d\left(\Theta_1\right)$$

Où $\mathbf{0}_d = [0 \cdots 0]^T$. Sachant que $\mathbf{k}_d\left(\Theta_1\right)^H\mathbf{k}_d\left(\Theta_1\right) \le 1$ et que $\mathbf{k}_d{}^H\mathbf{k}_d \le 1$
Classer les éléments contenus dans $\Psi$ suivant le niveau des ambiguïtés d'ordre 1 tel qu'au final

$$\Psi = \left\{\left(\eta_1^{ambig(k)}, \mathbf{p}_{d,n}^{(k)}\right) \quad \text{pour} \quad \left(1 \le k \le K\right) \quad \text{avec} \quad \eta_1^{ambig(1)} \ge \cdots \ge \eta_1^{ambig(K)}\right\}$$

Classement du réseau le plus robuste aux ambiguïtés d'ordre 1 au réseau le moins robuste en exécutant les étapes suivantes
Stockage des nb meilleurs réseaux vis à vis des ambiguïtés d'ordre 1 tel que $\Psi_{opt} \subset \Psi$ avec $\Psi_{opt} = \{(\eta_1^{ambig(k)}, \mathbf{p}_{d,n}^{(k)})$ pour $(1 \le k \le nb)\}$
Réitérer lesdites étapes pour tous les réseaux i=1, ....I
Calcul des ambiguïtés d'ordre P des réseaux de $\Psi_{opt}$ selon
Le critère de robustesse aux ambiguïtés d'ordre $P$ $\eta_P(\lambda)^k$ pour la longueur d'onde $\lambda$ vérifiant

$$\mathrm{Pr}\left(\eta_P\left(\lambda\right)^k < \eta_P\left(\lambda\right)\right) = p_{fa} \text{ pour } 1 \le k \le nb \tag{67}$$

où Pr (.) est une probabilité et où $p_{f\alpha}$ vaut typiquement 5%.
pour obtenir $\Psi_{opt} = \{(\eta_1^{ambig(k)}, \eta_P(c/f_{max})^{(k)}, \mathbf{p}_{d,n}^{(k)})$ pour $(1 \le k \le nb)\}$.
Classement des éléments de $\Psi_{opt}$ suivant le niveau des ambiguïtés d'ordre P tel qu'en final
$\Psi_{opt} = \{(\eta_1^{ambig(k)}, \eta_P^{(k)}(c/f_{max}), \mathbf{p}_{d,n}^{(k)})$ pour $(1 \le k \le nb)$ avec $\eta_P^{(1)} \ge ... \ge \eta_P^{(nb)}\}$ : Classement du réseau le plus robuste aux ambiguïtés d'ordre P au réseau le moins robuste.

7. Procédé selon l'une des revendications 1 à 6 **caractérisé en ce que** le réseau de capteurs est un réseau comprenant deux branches en forme de V sur lesquelles sont répartis, les deux branches formant un angle $\delta$.

8. Procédé selon l'une des revendications 1 à 6 **caractérisé en ce que** le réseau de capteurs est un réseau dont la répartition des capteurs est disposée sur un double cercle.

9. Procédé selon l'une des revendications 1 à 6 **caractérisé en ce que** le réseau initial est un réseau de capteur d-D dont la répartition des capteurs suit une loi gaussienne.

10. Procédé selon l'une des revendications 1 à 6 **caractérisé en ce que** le réseau initial est un réseau de capteurs de dimension d-D, les capteurs étant répartis selon une loi uniforme.

11. Utilisation du procédé selon l'une des revendications 1 à 8 **caractérisé en ce qu'**il fonctionne dans la bande UHF ou VHF.

## Patentansprüche

**1.** Verfahren zur Bestimmung der optimalen Position identischer Sensoren in einem Kommunikationsnetzwerk mit einer Dimension zwischen d=1 bis 3, wobei d die Dimension des Sensorennetzwerks ist, das zur Durchführung von Goniometriemessungen bestimmt ist, wobei die Goniometriemessungen die Vieldeutigkeiten des Netzwerks unter Berücksichtigung der Parameter eines Pflichtenhefts minimieren, die Monoquellenleistungen des Netzwerks umfassen, die von Unsicherheitsellipsen übersetzt sind oder von einem Intervall für den Fall von eindimensionalen Netzwerken, wobei die Füllung, die aus der Größe eines Sensornetzwerks resultiert, das Auflösungsvermögen in Anwesenheit von zwei Quellen, **dadurch gekennzeichnet, dass** es mindestens die folgenden Schritte umfasst:

Initialisieren einer Netzwerkkennzahl i auf 0 und der Anzahl verfügbarer Netzwerke auf 1,
Auswählen eines Netzwerks, das eine Struktur von N Sensoren hat, die in Ausgangspositionen $\mathbf{p}_{d,n}$ ($1 \leq n \leq N$) angeordnet sind, nach dem Zufallsprinzip,

Bestimmen der Matrix $D_{pp}^{directif}$, die der Unsicherheitsellipse aus dem Pflichtenheft gehorcht, oder dem Intervall für eindimensionale Netzwerke, wobei die Achse der Unsicherheitsellipse im Raum der Azimut- und Elevationswinkel durch die im Azimut minimale und maximale Standardabweichungen $\sigma_{\theta_{min}=\theta_{min}} = \min_{\theta} \sigma_{\theta}$ und $\sigma_{\theta_{max}=\theta_{max}} = \max_{\theta} \sigma_{\theta}$ definiert sind, wobei $\sigma_{\theta} = \sqrt{E\left[\left(\theta_m - \hat{\theta}_m\right)^2\right]}$, und durch die Standardabweichung in der Elevation $\sigma_{\Delta} = \sqrt{E\left[\left(\Delta_m - \hat{\Delta}_m\right)^2\right]}$, wobei die Bestimmung die folgenden Schritte umfasst:

Berechnen der Korrelationsmatrix $\mathbf{D}_{pp}$ der Positionen $\mathbf{p}_{d,n}$ der Sensoren eines Ausgangsnetzwerks d-D

$$\mathbf{D}_{pp} = \frac{1}{N} \sum_{n=1}^{N} \left(\mathbf{p}_{d,n} - \overline{\mathbf{p}}\right)\left(\mathbf{p}_{d,n} - \overline{\mathbf{p}}\right)^T \text{ avec } \overline{\mathbf{p}} = \frac{1}{N} \sum_{n=1}^{N} \mathbf{p}_{d,n}$$

wobei d die Dimension des Sensornetzwerks ist und n die Kennzahl des Sensors,
Bestimmen der Werte $\sigma_{d,1} = \sigma_{\theta min}|\cos(\Delta_m)|$ und $\sigma_{d,d} = \sigma_{\theta min}|\cos(\Delta_m)|$ ($\sigma_{3,2} = \sigma_{\Delta}$ für die 3-D-Netzwerke mit d=3) der Achsen der Unsicherheitsellipse im Raum des Wellenvektors ausgehend von $\sigma_{\theta min}$ und $\sigma_{\theta max}$, die die Achsen der Unsicherheitsellipse im Azimut- und Elevationsraum sind oder dem Intervall im eindimensionalen Fall entsprechen, mit d = 1, 2 oder 3,
wobei $\sigma_{\theta min}$ und $\sigma_{\theta max}$ der minimale und maximale Wert der Azimutpräzision in der Elevation $\Delta_m$ sowie eine Präzision $\sigma\Delta$ bei $\Delta_m$ = 0. sind,
Berechnen der Größe jedes Netzwerks $D_i$ unter Berücksichtigung der Achsen der Unsicherheitsellipsen $\sigma_{d,i}$ im Raum des Wellenvektors, die von den Achsen der Ellipse im Azimut- und Elevationsraum abhängen, die im Pflichtenheft gegeben sind:

$$D_i = \left(\left(\sqrt{\alpha/8N}\right)/\sigma_{d,i}\right)\lambda \text{ für } 1 \leq i \leq d,$$

mit N als Anzahl der Sensoren, $\alpha$ als ein Parameter, der vom Leistungstyp abhängt, wie in Tabelle 1 angegeben, $\lambda$ als Wellenlänge,
Bestimmen der Korrelationsmatrix $\mathbf{D}_{pp}^{directif}$ unter Verwendung von

$$\mathbf{D}_{pp}^{directif} = \sum_{i=1}^{d} \left(D_i\right)^2 \mathbf{h}_i \mathbf{h}_i^{H}$$

wobei $(D_i)^2$ und $\mathbf{h}_i$ jeweils die eigenen Werte und eigenen Vektoren von $\mathbf{D}_{pp}^{directif}$ und den $\mathbf{h}_i$ sind, die von $\theta_{directif}$

abhängen,

Bestimmen der Position $\mathbf{p}_{d,n}$ jedes Vektors n des direktiven Netzwerks durch Durchführen von $\mathbf{P}_{d,n}^{directif}=$ $(\mathbf{D}_{pp}^{directif})^{1/2}\mathbf{D}_{pp}^{-1/2}$ ($\mathbf{P}_{d,n}$- $\mathbf{P}$),

Testen, ob die Werte der Positionen der Sensoren die technischen Bedingungen des Pflichtenhefts verifizieren und wenn nein, Ändern des Werts von i in i+1, $i=i+1$ und wenn $i<I$, Rückkehr zum Schritt der Auswahl eines Ausgangsnetzwerks.

**2.** Verfahren nach Anspruch 1, **dadurch gekennzeichnet, dass** für ein Netzwerk der Dimension 2, in dem die Unsicherheitsellipse durch ihre große Achse und ihre kleine Achse gekennzeichnet ist, das Verfahren die folgenden Schritte aufweist:

Bestimmen der Werte von $\sigma_{d,1} =\sigma_{\theta min}|\cos (\Delta_m) |$ und $\sigma_{d,2} =\sigma_{\theta max}|\cos (\Delta_m) |$

$\sigma_{\theta min} \leq \sigma_\theta \leq \sigma_{\theta max}$ mit $\begin{cases} \sigma_{\theta_{min}} = \dfrac{\sigma_{d,1}}{|\cos(\Delta_m)|} \\ \\ \sigma_{\theta_{max}} = \dfrac{\sigma_{d,2}}{|\cos(\Delta_m)|} \end{cases}$, Bestimmen der Größen $D_i = \left(\left(\sqrt{\alpha/8N}\right)/\sigma_{d,i}\right)\lambda$ des Netzwerks für

$1\leq i\leq 2$ und Bestimmen der Korrelationsmatrix $\mathbf{D}_{pp}^{directif}$

$$\mathbf{D}_{pp}^{directif} = \left(D_1\right)^2 \mathbf{k}_2\left(\theta_m + \frac{\pi}{2},0\right)\mathbf{k}_2\left(\theta_m + \frac{\pi}{2},0\right)^H + \left(D_2\right)^2 \mathbf{k}_2\left(\theta_m,0\right)\mathbf{k}_2\left(\theta_m,0\right)^H$$

aus $\theta_{directif} = \theta_m - \dfrac{\pi}{2}$, Bestimmen der Positionen der Sensoren des direktiven Netzwerks

$$\mathbf{p}_{2,n}^{directif} = \left(\mathbf{D}_{pp}^{directif}\right)^{1/2} \mathbf{D}_{pp}^{-1/2}\left(\mathbf{p}_{2,n} - \overline{\mathbf{p}}\right)$$ .

**3.** Verfahren nach Anspruch 1, **dadurch gekennzeichnet, dass** die Unsicherheitsellipse für ein dreidimensionales Sensorennetzwerk einem Ellipsoiden entspricht, der drei Achsen und zwei Winkel enthält und das Verfahren mindestens die folgenden Schritte aufweist:

Bestimmen der Werte von $\sigma_{d,1} =\sigma_{\theta min}|\cos (\Delta_m) |$, $\sigma_{d,2} =\sigma_\Delta$ und $\sigma_{d,3} =\sigma_{\theta max}|\cos (\Delta_m) |$ $\sigma_{\theta min}\leq\sigma_\theta\leq\sigma_{\theta max}$ mit

$\begin{cases} \sigma_{\theta_{min}} = \dfrac{\sigma_{d,1}}{|\cos(\Delta_m)|} \\ \\ \sigma_{\theta_{max}} = \dfrac{\sigma_{d,3}}{|\cos(\Delta_m)|} \end{cases}$,

wobei $\sigma_\Delta$ die Azimut-Standardabweichung aus dem Pflichtenheft $\Delta=\Delta_m$ ist,

ausgehend vom Pflichtenheft mit dem direktiven Azimut $\theta_{directif} = \theta_m + \dfrac{\pi}{2}$, für den die Azimutpräzision $\sigma_{\theta min}$ minimal ist,

Bestimmen der Größen $D_i = \left( \left( \sqrt{\alpha/8N} \right) / \sigma_{d,i} \right) \lambda$ des Netzwerks für $1 \leq i \leq 3$,

Bestimmen des Werts der Matrix

$$\mathbf{D}_{pp}^{\;directif} = (D_1)^2 \, \mathbf{k}\left(\theta_m + \frac{\pi}{2}, 0\right) \mathbf{k}\left(\theta_m + \frac{\pi}{2}, 0\right)^H + (D_2)^2 \, \mathbf{k}\left(\theta_m, \frac{\pi}{2}\right) \mathbf{k}\left(\theta_m, \frac{\pi}{2}\right)^H$$
$$+ (D_3)^2 \, \mathbf{k}\left(\theta_m, 0\right) \mathbf{k}\left(\theta_m, 0\right)^H \quad ,$$

und ausgehend von der Matrix, Bestimmen der Position der Sensoren des direktiven Netzwerks

$$\mathbf{p}_{3,n}^{\;directif} = \left( \mathbf{D}_{pp}^{\;directif} \right)^{1/2} \mathbf{D}_{pp}^{\;-1/2} \left( \mathbf{p}_{3,n} - \overline{\mathbf{p}} \right) \; .$$

4. Verfahren nach Anspruch 1, **dadurch gekennzeichnet, dass** das Netzwerk ein eindimensionales lineares Sensorennetzwerk ist, wobei in diesem Fall die Unsicherheitsellipse durch die Standardabweichung und die Verzerrung der Präzision der Schätzung der Komponente des Wellenvektors charakterisiert ist, die sich auf eine Linie projiziert, und dadurch, dass es, wenn der Azimut festgelegt ist, mindestens die folgenden Schritte umfasst:

Berechnung von $\sigma_d$, $1 = \sigma_\Delta |\sin(\Delta_m) \cos(\theta_0)|$ bei Verwendung der Daten aus der Tabelle

| Netzwerkdimension | | $\sigma_\theta$ | $\sigma_\Delta$ |
|---|---|---|---|
| 1-D oder linear | $\Theta_{m|\Delta_0} = \{\theta_m\}$ | $\sigma_\theta = \dfrac{\sigma_1}{\left|\cos(\Delta_0)\sin(\theta_m)\right|}$ | **Nicht definiert** |
| | $\Theta_{m|\theta_0} = \{\Delta_m\}$ | **Nicht definiert** | $\sigma_\Delta = \dfrac{\sigma_1}{\left|\sin(\Delta_m)\cos(\theta_0)\right|}$ |

Berechnen der Netzwerkgrößen $D_1$ anhand von $D_i = \left( \left( \sqrt{\alpha/8N} \right) / \sigma_{d,1} \right) \lambda$ ,

Berechnen der Korrelationsmatrix $\mathbf{D}_{pp}^{\;directif} = (D_1)^2$,

Berechnen der Position der Sensoren des direktiven Netzwerks mit $\mathbf{p}_{1,n}^{\;directif} = \sqrt{\dfrac{D_{pp}^{\;directif}}{D_{pp}}} \left( \mathbf{p}_{1,n} - \overline{\mathbf{p}} \right)$ .

5. Verfahren nach Anspruch 1, **dadurch gekennzeichnet, dass** es einen Schritt umfasst, bei dem die Allrichtungs- und Auflösungsvermögenskriterien ausgehend von der Position $\mathbf{p}_{d,n}$ der Sensoren eines Netzwerks bestimmt werden, unabhängig davon, ob es das ursprünglich ausgewählte Netzwerk oder auch das definierte direktive Netzwerk ist, unter Berücksichtigung der Kovarianzmatrix Dpp der Positionen der Sensoren und von

$$Q_{PP} = \frac{1}{N} \sum_{n=1}^{N} \left( p_{d,n} - \overline{p} \right)^{\otimes 2} \left( p_{d,n} - \overline{p} \right)^{\otimes 2H} \quad ,$$

Bestimmen des Werts von $\tilde{\mathbf{Q}}_{PP}$ aus Qpp und $\mathbf{D}_{pp}$,

Zerlegen der Matrix $\tilde{\mathbf{Q}}_{pp}$ in eigene Elemente, was zu $\tilde{Q}_{pp} = \sum_{i=1}^{d \times d} Q_i \mathbf{v}_i (\mathbf{v}_i)^H$ führt,

Bestimmen des Auflösungs-Allrichtungskriteriums $R_{omni} = \dfrac{\max_i Q_i}{\min_i Q_i}$ ,

Bestimmen des Auflösungsvermögens $R_{power} = \min_i |Q_i - 1|$ ,

Vergleichen dieser zwei Werte mit Werten aus dem Pflichtenheft und, wenn die bestimmten Werte nicht das Kriterium des Pflichtenhefts erfüllen, Auswählen eines neuen Netzwerks und Wiederholen der verschiedenen Schritte der Positionsberechnung der Sensoren und der Allrichtungs- und Auflösungsvermögenskriterien für Netzwerke mit der Dimension 1, 2 oder 3.

6. Verfahren nach Anspruch 1, **dadurch gekennzeichnet, dass** es einen Schritt umfasst, bei dem die Netzwerke in Abhängigkeit eines Vieldeutigkeitsgrads anhand der folgenden Schritte klassifiziert werden:

Initialisieren einer Gruppe $\Psi$, die Netzwerke und ihre Merkmale enthält,
Bestimmen, für ein Netzwerk, des Robustheitskriteriums $\eta_1^{ambig}$ gegenüber Vieldeutigkeiten der Ordnung 1, ausgehend von der Kenntnis der Frequenz $f_{max}$

$$\eta_1\left(\lambda = \frac{c}{f}\right) = \min_{\Delta k^H \Delta k \leq 2\frac{f}{f_{max}}} \left(1 - Diag_{\lambda_{max}}\left(a_{\lambda_{max}}(0_d), \Delta k\right)\right)$$ ,

wobei $\lambda_{max} = c/f_{max}$, wobei bekannt ist, dass $f \leq f_{max}$,

$$Diag_\lambda\left(a_\lambda\left(k_d(\Theta_1)\right), k_d\right) = Diag_\lambda\left(a_\lambda(0_d), \Delta k\right)$$

mit $\Delta k$, der einer Distanz $\Delta k = k_d - k_d(\Theta_1)$ entspricht,
wobei $0_d = [0 \cdots 0]^T$, wobei bekannt ist, dass $k_d(\Theta_1)^H k_d(\Theta_1) \leq 1$ und dass $k_d^H k_d \leq 1$,
Klassifizieren der in $\Psi$ enthaltenen Elemente gemäß dem Vieldeutigkeitsniveau der Ordnung 1, so dass letztendlich $\Psi = \{(\eta_1^{ambig(k)}, g\ p_{d,n}^{(k)})$ für $(1 \leq k \leq K)$ mit
Klassifizieren vom gegenüber den Vieldeutigkeiten der Ordnung 1 robustesten Netzwerk zum am wenigsten robusten Netzwerk anhand der folgenden Schritte:

Speichern der gegenüber den Vieldeutigkeiten der Ordnung 1 nb besten Netzwerke, wie $\Psi_{opt} \subset \Psi$ mit $\Psi_{opt}$ $= \{(\eta_1^{ambig(k)}, p_{d,n}^{(k)})$ für $(1 \leq k \leq nb)\}$,
Wiederholen der Schritte für alle Netzwerke i=1 ,....|,
Berechnen der Vieldeutigkeiten der Ordnung P der Netzwerke von $\Psi_{opt}$ gemäß dem Kriterium der Robustheit gegenüber Vieldeutigkeiten der Ordnung P $\eta_p(\lambda)^k$ für die Wellenlänge $\lambda$, die $Pr(\eta_P(\lambda)^k < \eta_P(\lambda)) = p_{fa}$ für $1 \leq k \leq nb$ überprüft, (67)
wobei Pr(.) eine Wahrscheinlichkeit ist und wobei $p_{fa}$ typischerweise 5 % beträgt,
um $\Psi_{opt} = \{(\eta_1^{ambig(k)}, \eta_P(c/f_{max})^{(k)}, p_{d,n}^{(k)})$ für $(1 \leq k \leq nb)\}$ zu erhalten,
Klassifizieren der Elemente von $\Psi_{opt}$ gemäß dem Niveau der Vieldeutigkeiten der Ordnung P, so dass letztendlich
$\Psi_{opt} = \{(\eta_1^{ambig(k)}, \eta_P^{(k)}(c/f_{max}), p_{d,n}^{(k)})$
für $(1 \leq k \leq nb)$ mit $\eta_P^{(1)} \geq \cdots \geq \eta_P^{(nb)}\}$ :
Klassifizieren vom gegenüber Vieldeutigkeiten der Ordnung P robustesten Netzwerk zum am wenigsten robusten Netzwerk.

7. Verfahren nach einem der Ansprüche 1 bis 6, **dadurch gekennzeichnet, dass** das Sensornetzwerk ein Netzwerk ist, das zwei V-förmige Zweige umfasst, auf denen angeordnet sind, wobei die zwei Zweige einen Winkel $\delta$ bilden.

8. Verfahren nach einem der Ansprüche 1 bis 6, **dadurch gekennzeichnet, dass** das Sensornetzwerk ein Netzwerk ist, dessen Sensorenverteilung auf einem Doppelkreis angeordnet ist.

9. Verfahren nach einem der Ansprüche 1 bis 6, **dadurch gekennzeichnet, dass** das Ausgangsnetzwerk ein Sensornetzwerk d-D ist, dessen Sensorverteilung einem Gaußschen Gesetz folgt.

**10.** Verfahren nach einem der Ansprüche 1 bis 6, **dadurch gekennzeichnet, dass** das Ausgangsnetzwerk ein Sensornetzwerk mit der Dimension d-D ist, wobei die Sensoren nach einem uniformen Gesetz verteilt sind.

**11.** Verwendung des Verfahrens nach einem der Ansprüche 1 bis 8, **dadurch gekennzeichnet, dass** es im UHF- oder VHF-Band arbeitet.

**Claims**

**1.** A method for determining the optimal position of identical sensors within a communications network with a dimension that varies from d=1 to 3, where d is the dimension of the network of sensors designed to carry out goniometry measurements, said goniometry measurements minimising the ambiguities of the network, whilst taking into account the parameters of specifications comprising mono-source performances of the network expressed by uncertainty ellipses, or by an interval in the case of one dimension networks, the resulting spatial requirement of the size of a network of sensors, the resolving power in the presence of two sources, **characterised in that** it comprises at least the following steps:

initialising a network index i to 0 and the number of networks available to 1;
randomly taking a network with a structure of N sensors disposed in initial positions $p_{d, n}$ ($1 \leq n \leq N$) ;

determining the matrix $D_{pp}^{directive}$ obeying the uncertainty ellipsis provided in the specifications or the interval for the one dimension networks, the axes of the uncertainty ellipsis in the space of the angles of azimuth and elevation being defined by the minimum and maximum standard deviations $\sigma_{\theta_{min}=\theta_{directif}} = \min_{\theta} \sigma_{\theta}$ and $\sigma_{\theta_{max}=\theta_{directif}-\frac{\pi}{2}} = \max_{\theta} \sigma_{\theta}$ by azimuth given that $\sigma_{\theta} = \sqrt{E\left[\left(\theta_m - \hat{\theta}_m\right)^2\right]}$ and by the standard deviation by elevation $\sigma_{\Delta} = \sqrt{E\left[\left(\Delta_m - \hat{\Delta}_m\right)^2\right]}$, said determination comprising the following steps:

calculating the correlation matrix $D_{pp}$ of the positions $p_{d,n}$ of the sensors of an initial network d-D

$$D_{pp} = \frac{1}{N}\sum_{n=1}^{N}\left(\mathbf{p}_{d,n} - \bar{\mathbf{p}}\right)\left(\mathbf{p}_{d,n} - \bar{\mathbf{p}}\right)^T \text{ with } \bar{\mathbf{p}} = \frac{1}{N}\sum_{n=1}^{N}\mathbf{p}_{d,n},$$

where d is the dimension of the array of sensors and n is the index of the sensor;
determining the values $\sigma_{d,1} = \sigma_{\theta min}|\cos(\Delta_m)|$ and $\sigma_{d,d} = \sigma\theta_{max}|\cos(\Delta_m|)$
($\sigma_{3,2} = \sigma_{\Delta}$ for the 3-D networks with d=3) of the axes of the uncertainty ellipsis in the space of the wave vector on the basis of $\sigma_{\theta min}$ and $\sigma_{\theta max}$, which are the axes of the uncertainty ellipsis in the space of the azimuth and of the elevation or which correspond to the interval in the one dimension case, with d = 1, 2 or 3;
where $\sigma_{\theta min}$ and $\sigma_{\theta max}$ are the minimum and maximum values of the precision by azimuth at the elevation $\Delta_m$, as well as a precision $\sigma_{\Delta}$ in/by $\Delta_m$ =0.;
calculating the size of each array $D_i$ by taking into account the axes of the uncertainty ellipses $\sigma_{d,i}$ in the space of the wave vector that depend on the axes of the ellipsis in the space of the azimuth and of the elevation that are provided in the specifications: $D_i = \left(\left(\sqrt{\alpha/8N}\right)/\sigma_{d,i}\right)\lambda$ for $1 \leq i \leq d$;

with N being the number of sensors, $\alpha$ being a parameter depending on the type of performance as shown in Table-1, $\lambda$ being the wavelength;

determining the correlation matrix $D_{pp}^{directive}$ using

$$\mathbf{D}_{pp}^{\ directif} = \sum_{i=1}^{d} \left( D_i \right)^2 \mathbf{h}_i \mathbf{h}_i^{\ H}$$

where $(D_i)^2$ and $h_i$ are respectively the specific values and specific vectors of

$D_{pp}^{directive}$ and the $h_i$ depend on $\theta_{directive}$

determining the position $\underline{p}_{d,n}$ of each sensor $n$ of the directive network by carrying out $\mathbf{p}_{d,n}{}^{directif} = (\mathbf{D}_{pp}{}^{directif})^{1/2} \mathbf{D}_{pp}{}^{-1/2} (\mathbf{p}_{d,n}\text{-} \mathbf{p})$

testing whether the values of the positions of the sensors confirm the technical conditions provided in the specifications and, if not, varying the value of i by i+1, i=i+1 and if i<1 then returning to the step of drawing an initial network.

2. The method according to claim 1, **characterised in that** for a 2- dimension network in which the uncertainty ellipsis is **characterised by** its large axis and its small axis, said method comprises the following steps:

determining the values of $\sigma_{d,1} = \sigma_{\theta\min}|\cos (\Delta_m) |$ and $\sigma_{d,2} = \sigma_{\theta\max}|\cos (\Delta_m) |$

$\sigma_{\theta\min} \leq \sigma_\theta \leq \sigma_{\theta\max}$ with : $\begin{cases} \sigma_{\theta_{\min}} = \dfrac{\sigma_{d,1}}{|\cos(\Delta_m)|} \\ \sigma_{\theta_{\max}} = \dfrac{\sigma_{d,2}}{|\cos(\Delta_m)|} \end{cases}$ , determining the sizes $D_i = \left( \left( \sqrt{\alpha/8N} \right) / \sigma_{d,i} \right) \lambda$ of the network for

$1 \leq i \leq 2$ and determining the correlation matrix $D_{pp}^{directive}$

$$\mathbf{D}_{pp}^{\ directif} = \left( D_1 \right)^2 \mathbf{k}_2 \left( \theta_m + \frac{\pi}{2}, 0 \right) \mathbf{k}_2 \left( \theta_m + \frac{\pi}{2}, 0 \right)^H + \left( D_2 \right)^2 \mathbf{k}_2 \left( \theta_m, 0 \right) \mathbf{k}_2 \left( \theta_m, 0 \right)^H$$

on the basis of directive $\theta_{directive} = \theta_m - \frac{\pi}{2}$, determining the positions of the sensors of the directive network

$$\mathbf{p}_{2,n}^{\ directif} = \left( \mathbf{D}_{pp}^{\ directif} \right)^{1/2} \mathbf{D}_{pp}^{\ -1/2} \left( \mathbf{p}_{2,n} - \overline{\mathbf{p}} \right).$$

3. The method according to claim 1, **characterised in that** for an array of 3- dimension sensors, the uncertainty ellipsis corresponds to an ellipsoid that contains three axes and two angles and said method comprises at least the following steps:

determining the values of $\sigma_{d,1} = \sigma_{\theta\min}|\cos (\Delta_m) |$ , $\sigma_{d,2} = \sigma_\Delta$ et $\sigma_{d,3} = \sigma_{\theta\max}|\cos (\Delta_m) |$

$\sigma_{\theta\min} \leq \sigma_\theta \leq \sigma_{\theta\max}$ with $\begin{cases} \sigma_{\theta_{\min}} = \dfrac{\sigma_{d,1}}{|\cos(\Delta_m)|} \\ \sigma_{\theta_{\max}} = \dfrac{\sigma_{d,3}}{|\cos(\Delta_m)|} \end{cases}$ ,

where $\sigma_\Delta$ is the standard deviation by azimuth provided in the specifications at $\Delta = \Delta_m$;

on the basis of the specifications providing the directive azimuth $\theta_{\text{directive}} = \; = \theta_m + \dfrac{\pi}{2}$

for which the precision by azimuth $\sigma_{\theta_{\min}}$ is minimal;

determining the sizes $\mathrm{Di} = \left( \left( \sqrt{\alpha / 8N} \right) / \sigma_{d,i} \right) \lambda$ of the network for $1 \leq i \leq 3$;

determining the value of the matrix:

$$\mathbf{D}_{pp}{}^{directif} = (D_1)^2 \, \mathbf{k}\left(\theta_m + \frac{\pi}{2}, 0\right) \mathbf{k}\left(\theta_m + \frac{\pi}{2}, 0\right)^H + (D_2)^2 \, \mathbf{k}\left(\theta_m, \frac{\pi}{2}\right) \mathbf{k}\left(\theta_m, \frac{\pi}{2}\right)^H$$
$$+ (D_3)^2 \, \mathbf{k}\left(\theta_m, 0\right) \mathbf{k}\left(\theta_m, 0\right)^H$$

and, on the basis of said matrix, determining the position of the sensors of the directive network

$$\mathbf{p}_{3,n}{}^{directif} = \left( \mathbf{D}_{pp}{}^{directif} \right)^{1/2} \mathbf{D}_{pp}{}^{-1/2} \left( \mathbf{p}_{3,n} - \overline{\mathbf{p}} \right).$$

4. The method according to claim 1, **characterised in that** the network is a network of one dimension linear sensors, the uncertainty ellipsis being in this case **characterised by** the standard deviation and the bias of the precision of estimation of the component of the wave vector projecting over a line, and in that it comprises at least the following steps, in the event that the azimuth is fixed:

calculating $\sigma_{d,1} = \sigma_\Delta |\sin (\Delta_m) \cos (\theta_0)|$ using the data in the following table:

| Dimension of the network | | $\sigma_\theta$ | $\sigma_\Delta$ |
|---|---|---|---|
| 1-D or linear | $\Theta_{m|\Delta_0} = \{\theta_m\}$ | $\sigma_\theta = \dfrac{\sigma_1}{\left|\cos(\Delta_0)\sin(\theta_m)\right|}$ | Not defined |
| | $\Theta_{m|\theta_0} = \{\Delta_m\}$ | Not defined | $\sigma_\Delta = \dfrac{\sigma_1}{\left|\sin(\Delta_m)\cos(\theta_0)\right|}$ |

calculating the sizes of the network $D_i$ by carrying out $D_i = \left( \left( \sqrt{\alpha/8N} \right) / \sigma_{d,1} \right) \lambda$;

calculating the correlation matrix $D_{pp}^{directive} = (D_1)^2$;

calculating the position of the sensors of the directive network by carrying out:

$$\mathbf{p}_{1,n}{}^{directif} = \sqrt{\dfrac{D_{pp}{}^{directif}}{D_{pp}}} \left( \mathbf{p}_{1,n} - \overline{\mathbf{p}} \right).$$

5. The method according to claim 1, **characterised in that** it comprises a step during which omnidirectionality and resolving power criteria are determined on the basis of the position $p_{d,n}$ of the sensors of a network, whether it is the initially drawn network or even the directive network, defined by taking into account the covariance matrix $D_{pp}$ of the positions of the sensors and of

$$Q_{pp} = \frac{1}{N} \sum_{n=1}^{N} \left( p_{d,n} - \bar{p} \right)^{\otimes 2} \left( p_{d,n} - \bar{p} \right)^{\otimes 2H}$$

determining the value of $\tilde{Q}_{PP}$ on the basis of $Q_{PP}$ and of $D_{pp}$;
decomposing the matrix $\tilde{Q}_{PP}$ into specific elements which results in

$$\bar{Q}_{pp} = \sum_{i=1}^{d \times d} Q_i \mathbf{v}_i \left( \mathbf{v}_i \right)^H$$

determining the omnidirectionality criterion by resolution $R_{omni} = \dfrac{\max_i Q_i}{\min_i Q_i}$ ; ;

determining the resolving power $R_{power} = \min_i |Q_i - 1|$ ;

comparing these two values with values provided in the specifications and, if the determined values do not meet the criterion of the specifications, selecting a new network and repeating the various steps of calculating the position of the sensors and the omnidirectionality and resolving power criteria for 1, 2 or 3 dimension networks.

6. The method according to claim 1, **characterised in that** it comprises a step during which the networks are classified as a function of a degree of ambiguity by executing the following steps:

   initialising a set $\psi$ containing networks and their characteristics;
   determining, for a network, the $\eta_1^{ambig}$ criterion of the robustness to first- order ambiguities on the basis of the knowledge of the frequency $f_{max}$

$$\eta_1 \left( \lambda = \frac{c}{f} \right) = \min_{\substack{\Delta k \\ \Delta k^H \Delta k \le 2 \frac{f}{f_{max}}}} \left( 1 - Diag_{\lambda_{max}} \left( \mathbf{a}_{\lambda_{max}} \left( \mathbf{0}_d \right), \Delta k \right) \right) ,$$

   where $\lambda_{max} = c / f_{max}$ given that $f \le f_{max}$,
   with $\Delta k$ corresponding to a distance

$$Diag_{\lambda} \left( \mathbf{a}_{\lambda} \left( \mathbf{k}_d \left( \Theta_1 \right) \right), \mathbf{k}_d \right) = Diag_{\lambda} \left( \mathbf{a}_{\lambda} \left( \mathbf{0}_d \right), \Delta \mathbf{k} \right)$$

$$\Delta \mathbf{k} = \mathbf{k}_d - \mathbf{k}_d \left( \Theta_1 \right)$$

   where $0_d = [0 \ldots 0]^T$ given that $k_d(\Theta_1)^H k_d(\Theta_1) \le 1$ and that $k_d^H k_d \le 1$;
   classifying the elements contained in $\psi$ according to the level of the first-order ambiguities such that in the end

$$\Psi = \left\{ \left( \eta_1^{ambig(k)}, \mathbf{p}_{d,n}^{(k)} \right) \text{ for } (1 \le k \le K) \text{ with } \eta_1^{ambig(1)} \ge \cdots \ge \eta_1^{ambig(K)} \right\} ;$$

   classifying the network that is most robust to first-order ambiguities in the network that is least robust by executing the following steps:

   storing nb best networks in relation to first-order ambiguities such that:

$$\Psi_{opt} \subset \Psi \text{ with } \Psi_{opt} = \left\{ \left( \eta_1^{ambig(k)}, \mathbf{p}_{d,n}^{(k)} \right) \text{ for } (1 \le k \le nb) \right\}$$

   repeating said steps for all of the networks i=1,...I;

calculating P-order ambiguities for the networks of $\Psi_{opt}$ according to the criterion for robustness to **P** $\eta_P(\lambda)^k$ -order ambiguitues for the wavelength;
$\lambda$ verifying

$$\Pr\left(\eta_P\left(\lambda\right)^k < \eta_P\left(\lambda\right)\right) = p_{fa} \text{ for } 1 \leq k \leq nb,$$

where Pr (.) is a probability and where $p_{fa}$ typically equals 5%
so as to obtain $\Psi_{opt} = \{(\eta_1{}^{ambig(k)}, \eta_P (c/ f_{max})^{(k)}, \mathbf{p}_{d,n}{}^{(k)}) \text{ for } (1 \leq k \leq nb) \}$ ;
classifying elements of $\psi_{opt}$ according to the level of P-order ambiguities such that in the end

$$\Psi_{opt} = \left\{\left(\eta_1{}^{ambig(k)}, \eta_P{}^{(k)}(c/f_{max}), \mathbf{p}_{d,n}{}^{(k)}\right) \text{ for } (1 \leq k \leq nb) \text{ with } \eta_P{}^{(1)} \geq \cdots \geq \eta_P{}^{(nb)}\right\};$$

classifying the network that is most robust to P-order ambiguities to the least robust network.

7. The method according to any one of claims 1 to 6, **characterised in that** the network of sensors is a network comprising two V-shaped branches on which are distributed, the two branches forming an angle $\delta$.

8. The method according to any one of claims 1 to 6, **characterised in that** the network of sensors is a network in which the sensors are distributed over a double circle.

9. The method according to any one of claims 1 to 6, **characterised in that** the network of sensors is a network of d-D sensors in which the sensors are distributed according to a Gaussian rule.

10. The method according to any one of claims 1 to 6, **characterised in that** the initial network is a network of d-D sensors, said sensors being distributed according to a uniform rule.

11. The use of the method according to any one of claims 1 to 8, **characterised in that** it operates in the UHF or VHF band.

FIG.1

FIG.2

FIG.4

**FIG.3**

Réseau circulaire
de rayon $R_1$ avec $N_1$ capteurs

$R_1$

$R_2$

$\delta_2 - \delta_1$

Capteur Elémentaire

Réseau circulaire
de rayon $R_2$ avec $N_2$ capteurs

FIG.5

$\overline{O_1 O_2} = \begin{bmatrix} x_0 \\ y_0 \end{bmatrix}$

$O_2$

$\delta$

$O_1$

FIG.6

Capteur
élémentaire

$D_{ph}$

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **H. GAZZAH ; S. MARCOS.** Cramer-Rao Bounds for Antenna Array Design. *journal IEEE Trans. Signal Processing,* Janvier 2006, vol. 54 (1), 336-345

- **HOUCEM GAZZA et al.** Optimum ambiguity-face isotropic antenna arrays. *ICASSP 2009,* Avril 2009